# EUROPEAN PATENT APPLICATION

(11) **EP 0 967 601 A1**
(43) Date of publication of application: **29.12.1999**
(21) Application number: 99304866.9
(22) Date of filing: 22.06.1999
(51) Int. Cl.: G11B 19/12, G11B 7/00, G11B 5/00, G11B 5/012

(54) **Information recording/playback apparatus and recording medium unit used therefor**

(30) Priority: 22.06.1998 JP 17452398
(71) Applicant: NEC CORPORATION, Tokyo (JP)
(72) Inventor: Utsunomiya, Motoyasu, Tokyo (JP); Ishikawa, Jun, Tokyo (JP)
(74) Representative: Moir, Michael Christopher

(57) **Abstract**

In a compatible information recording/playback apparatus, an optical disk cartridge stores an optical disk. A magnetic disk drive stores a magnetic recording medium, drive mechanism, and first connector, and has almost the same outer size except for the first connector as the outer size of the optical disk cartridge. A loading mechanism loads the optical disk cartridge and disk drive serving as recording medium units. A medium determination mechanism identifies whether a loaded recording medium unit is the optical disk cartridge or magnetic disk drive. A second connector is connected to the first connector when the magnetic disk drive is loaded. An optical drive unit records/plays back information on/from the optical disk of the optical disk cartridge. A controller drives the optical drive unit when the medium determination mechanism identifies the loaded recording medium unit as the optical disk cartridge, and drives the drive mechanism of the magnetic disk drive via the first and second connectors when the medium determination mechanism identifies the loaded recording medium unit as the magnetic disk drive. A recording medium unit is also disclosed.

## Description

### Background of the Invention

The present invention relates to an information recording/playback apparatus for loading an optical disk with a low recording/playback speed while storing it in a cartridge or directly mounting it on a tray and, more particularly, to a compatible information recording/playback apparatus capable of compatibly loading a magnetic disk drive with a high recording/playback speed to perform recording/playback.

An optical disk is a low-cost removable medium, but generally requires a long head positioning time. Further, an optical disk unit for performing recording/playback at a constant linear speed requires a long time to control rotation of a spindle motor and exhibits poor random access performance. To the contrary, a magnetic disk drive is a high-cost unit, but exhibits superior random access performance to the optical disk unit.

Considering the features of the two types of information recording/playback apparatuses, personal computers and the like use magnetic disk drives as fixed secondary memories, and in addition CD-ROM (Compact Disk-Read Only Memory) recording/playback apparatuses, thereby improving the user's convenience. At present, personal computers are normally equipped with optical disk units and fixed magnetic disk drives.

With the recent development of the digital video technique, high-speed, large-capacity information recording/playback apparatuses such as a magnetic disk drive are being used as not fixed apparatuses but removable recording/playback media (as not drives but only media with cartridges). For example, a digital video apparatus is equipped with a magnetic disk drive capable of removing only a magnetic disk medium so as to use a magnetic recording medium in place of a conventional videocassette.

Under these circumstances, a compatible information recording/playback apparatus for the optical disk and magnetic disk drive becomes important to enhance the convenience of the information recording/playback apparatus and downsize the apparatus. However, this apparatus has not been disclosed yet.

For example, Japanese Patent Laid-Open No. 5-166280 discloses only to inhibit erroneous insertion of a magnetic disk cartridge in an optical disk information recording/playback apparatus. Japanese Patent Laid-Open Nos. 6-318386 and 9-167428 disclose only techniques of realizing compatibility between optical disks free from any large difference in recording/playback speed in information recording/playback apparatuses.

As described above, the conventional information recording/playback apparatus cannot compatibly record/play back two different types of media, i.e., an optical disk and detachable magnetic disk drive. The optical disk and magnetic disk drive respectively require dedicated information recording/playback apparatuses, which is inconvenient for a user and increases the apparatus size.

### Summary of the Invention

It is an object of the present invention to provide a compatible information recording/playback apparatus and recording medium unit capable of realizing compatible recording/playback on/from a low-cost, low-speed optical disk and high-cost, high-speed magnetic disk drive to reduce the apparatus size, and allowing the user to select a medium meeting his recording/playback need.

In a first aspect, the present invention provides information recording/playback apparatus comprising:
an optical drive unit for recording/playing back information on/from an optical disk stored in an optical disk cartridge;
a loading mechanism for loading a said optical disk cartridge and a magnetic disk for storing a magnetic recording medium and a drive mechanism for recording/playing back information on/from a magnetic recording medium stored in said disk;
a medium determination mechanism for identifying whether a said optical disk cartridge or a said magnetic disk has been loaded; and
a controller for driving said optical drive unit when said medium determination mechanism identifies that a said optical disk cartridge has been loaded, or driving a drive mechanism of a said magnetic disk when said medium determination mechanism identifies that a said magnetic disk has been loaded.

In the second aspect, the present invention provides information recording/playback apparatus comprising:
an optical disk cartridge for storing an optical disk;
an optical drive unit for recording/playing back information on/from an optical disk stored in said optical disk cartridge;
a magnetic disk drive for storing a magnetic recording medium and a drive mechanism for recording/playing back information on/from a magnetic recording medium stored in said disk drive;
a loading mechanism for loading said optical disk cartridge and said disk drive;
a medium determination mechanism for identifying whether said optical disk cartridge or said magnetic disk drive has been loaded; and
a controller for driving said optical drive unit when said medium determination mechanism identifies that said optical disk cartridge has been loaded, and driving said drive mechanism of said magnetic disk drive when said medium determination mechanism identifies that said magnetic disk drive has been loaded.

In a preferred embodiment of this aspect of the present invention, there is provided a compatible information recording/playback apparatus comprising an optical disk cartridge storing an optical disk, a magnetic disk drive which stores a magnetic recording medium, a drive mechanism for recording/playing back information on/from the magnetic recording medium, and a first connector, and has substantially the same outer size except for the first connector as an outer size of the optical disk cartridge, a loading mechanism for loading the optical disk cartridge and disk drive serving as recording medium units, a medium determination mechanism for identifying whether a loaded recording medium unit is the optical disk cartridge or magnetic disk drive, a second connector which is connected to the first connector when the magnetic disk drive is loaded, an optical drive unit for recording/playing back information on/from the optical disk of the optical disk cartridge, and a controller for driving the optical drive unit when the medium determination mechanism identifies the loaded recording medium unit as the optical disk cartridge, and driving the drive mechanism of the magnetic disk drive via the first and second connectors when the medium determination mechanism identifies the loaded recording medium unit as the magnetic disk drive.

In a third aspect, the present invention provides a recording medium unit comprising:
a recording medium;
a housing storing said recording medium; and
a target detection member provided on an outer surface of said housing to indicate the type of stored recording medium.

### Brief Description of the Drawings

Fig. 1 is a perspective view showing an optical disk cartridge according to the first embodiment of the present invention;
Fig. 2 is a perspective view showing a magnetic disk drive according to the first embodiment of the present invention;
Figs. 3A and 3B are a front view and a perspective view, respectively, showing a compatible information recording/playback apparatus according to the first embodiment of the present invention;
Figs. 4A and 4B are a plan view and a longitudinal sectional view, respectively, showing the internal state of the magnetic disk drive shown in Fig. 2;
Figs. 5A and 5B are perspective views, respectively, showing the compatible information recording/playback apparatus in Figs. 3A and 3B that is used for the optical disk cartridge and magnetic disk drive;
Figs. 6A to 6C are views, respectively, showing the dimensional relationship between the optical disk cartridge and magnetic disk drive, and the connector of the magnetic disk drive;
Figs. 7A to 7E are views, respectively, showing the relationship between the connector of the tray and the connector of the magnetic disk drive;
Figs. 8A to 8E are views, respectively, showing the relationship between the connector of the tray and the connector of the optical disk cartridge;
Figs. 9A and 9B are views, respectively, showing loading operation in inserting the optical disk cartridge into the compatible information recording/playback apparatus shown in Figs. 3A and 3B;
Figs. 10A and 10B are views, respectively, showing loading operation subsequent to the operation in Figs. 9A and 9B in inserting the optical disk cartridge;
Figs. 11A and 11B are views, respectively, showing loading operation in inserting the magnetic disk drive into the compatible information recording/playback apparatus shown in Figs. 3A and 3B;
Figs. 12A and 12B are views, respectively, showing loading operation subsequent to the operation in Figs. 11A and 11B in inserting the magnetic disk drive;
Figs. 13A to 13D are views, respectively, showing medium determination operation in inserting the magnetic disk drive into the compatible information recording/playback apparatus shown in Figs. 3A and 3B;
Figs. 14A to 14C are views, respectively, showing operation in inserting the optical disk cartridge into the compatible information recording/playback apparatus shown in Figs. 3A and 3B;
Figs. 15A to 15C are a plan view, a sectional view, and an enlarged sectional view, respectively, showing a slant tray constituting a loading mechanism according to the second embodiment of the present invention;
Figs. 16A and 16B and Figs. 16C and 16D are views, respectively, showing the states in which the magnetic disk drive and optical disk cartridge are mounted on the slant tray in Figs. 15A to 15C;
Figs. 17A and 17B are views, respectively, showing loading operation in inserting the optical disk cartridge by the loading mechanism in Figs. 15A to 15C;
Figs. 18A and 18B are views, respectively, showing loading operation in inserting the magnetic disk drive by the loading mechanism in Figs. 15A to 15C;
Figs. 19A and 19B are views, respectively, showing medium determination operation in inserting the magnetic disk drive according to the second embodiment of the present invention;
Figs. 20A and 20B are views, respectively, showing medium determination operation in inserting the magnetic disk drive according to the third embodiment of the present invention;
Figs. 21A to 21C are views, respectively, showing medium determination operation in inserting the magnetic disk drive according to the fourth embodiment of the present invention;
Figs. 22A and 22B are views, respectively, showing loading operation in inserting the optical disk according to the fifth embodiment of the present invention;
Figs. 23A and 23B are views, respectively, showing loading operation subsequent to the operation in Figs. 22A and 22B in inserting the optical disk;
Figs. 24A and 24B are views, respectively, showing loading operation in inserting the magnetic disk drive according to the fifth embodiment of the present invention;
Fig. 25 is a view showing loading operation subsequent to the operation in Figs. 24A and 24B in inserting the magnetic disk drive;
Figs. 26A to 26C are views, respectively, showing operation in inserting the optical disk cartridge into the compatible information recording/playback apparatus according to the sixth embodiment of the present invention;
Figs. 27A to 27C are views, respectively, showing operation in inserting the magnetic disk drive into the compatible information recording/playback apparatus according to the sixth embodiment of the present invention; and
Fig. 28 is a block diagram schematically showing the compatible information recording/playback apparatus in Figs. 3A and 3B.

### Description of the Preferred Embodiments

The present invention will be described in detail below with reference to the accompanying drawings.

### [First Embodiment]

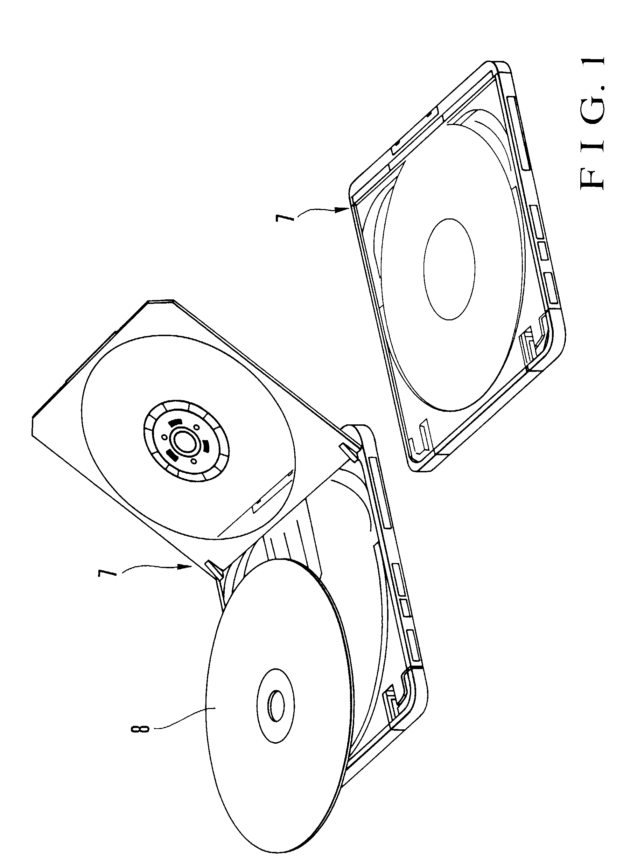

As shown in Fig. 1, an optical disk 8 such as an existing standard CD-ROM or DVD-RAM (Digital Video Disk-Random Access Memory) is stored in an optical disk cartridge 7 serving as a recording medium unit.

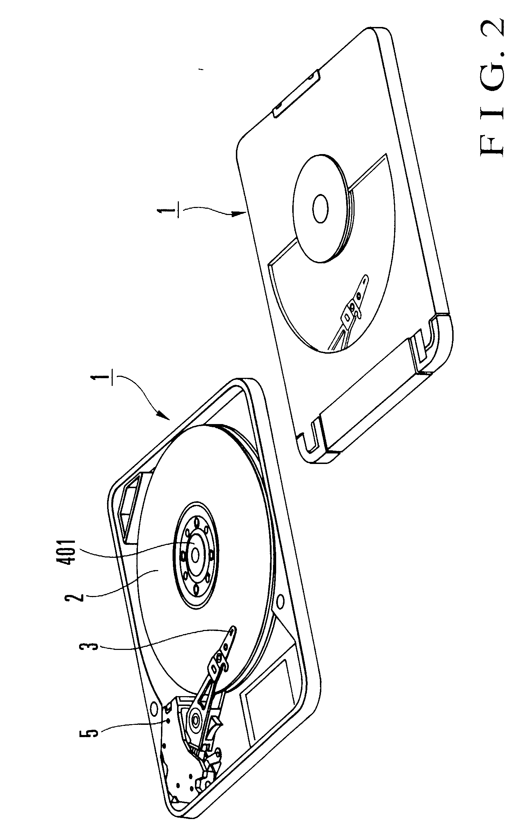

As shown in Fig. 2, a detachable magnetic disk drive 1 comprises the same arrangement as a conventional magnetic disk drive, i.e., a magnetic head 3, actuator 5 for driving the magnetic head 3, magnetic recording medium 2, spindle motor 401 for rotating the magnetic recording medium 2, and the like. The magnetic disk drive 1 serves as a recording medium unit and has almost the same outer size as the optical disk cartridge 7 in order to share a loading mechanism (to be described later).

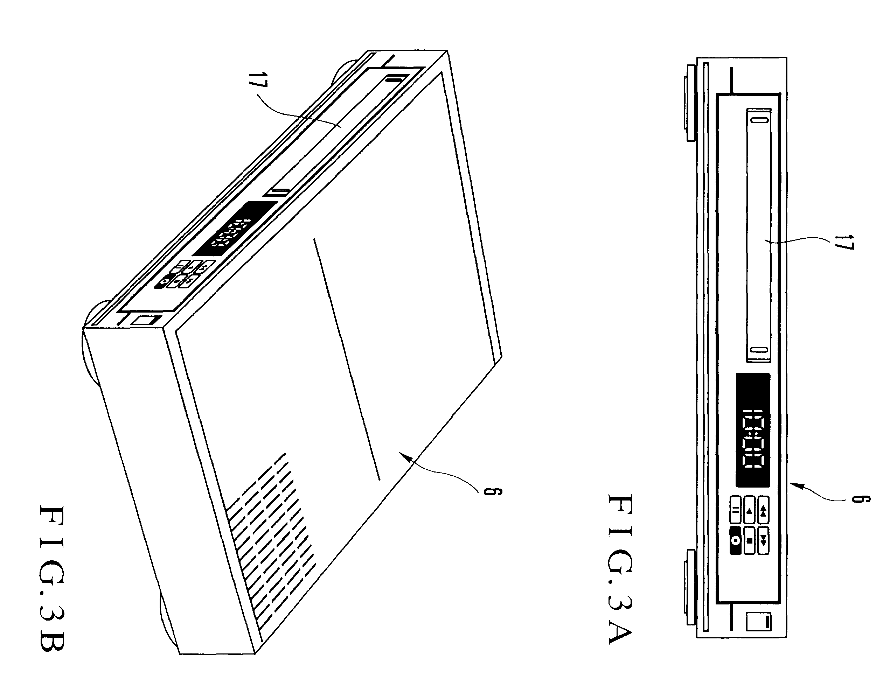

As shown in Figs. 3A and 3B, a compatible information recording/playback apparatus 6 has an insertion/ejection port 17 capable of commonly inserting the optical disk cartridge 7 or magnetic disk drive 1.

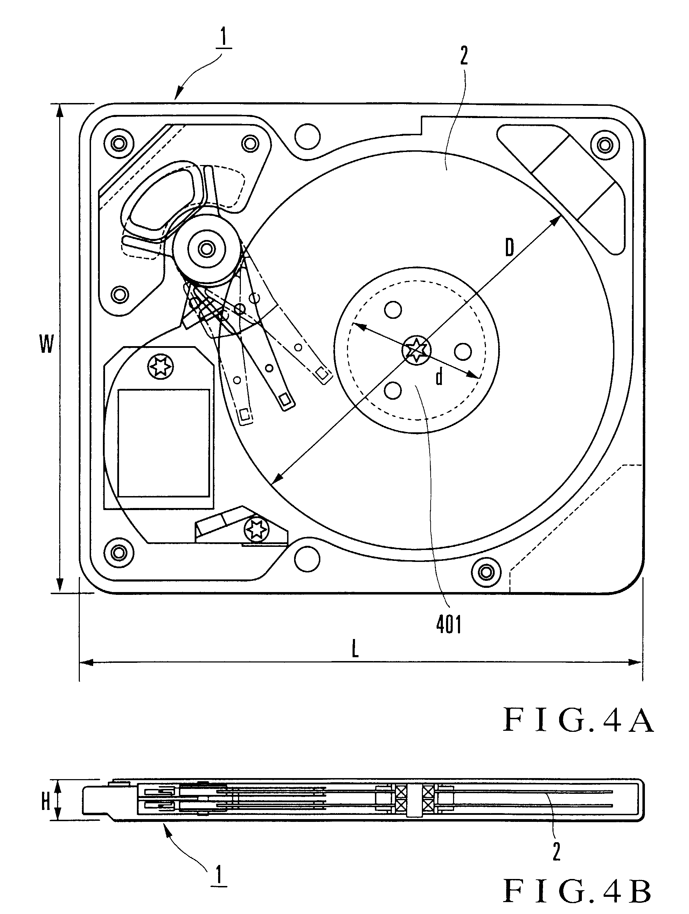

As shown in Figs. 4A and 4B, the housing dimensions, i.e., width W and height H of the magnetic disk drive 1 to be inserted in the insertion/ejection port 17 of the compatible information recording/playback apparatus 6 are set to W = 120 mm to 130 mm and H = 15 mm or less. Thus, the loading mechanism (to be described later) can be shared without greatly modifying the structure of an existing standard optical disk unit.

As shown in Fig. 4A, a diameter d of a hole at the center of the magnetic recording medium 2, which hole is necessary for fixing the magnetic recording medium 2 to the spindle motor 401, is set to d = 24 mm to 26 mm. Hence, a necessary strength enough to fix the magnetic recording medium 2 can be obtained to minimize loss of the user data area. An outer diameter D of the magnetic recording medium 2 is set to accommodate the magnetic recording medium 2 in the magnetic disk drive 1.

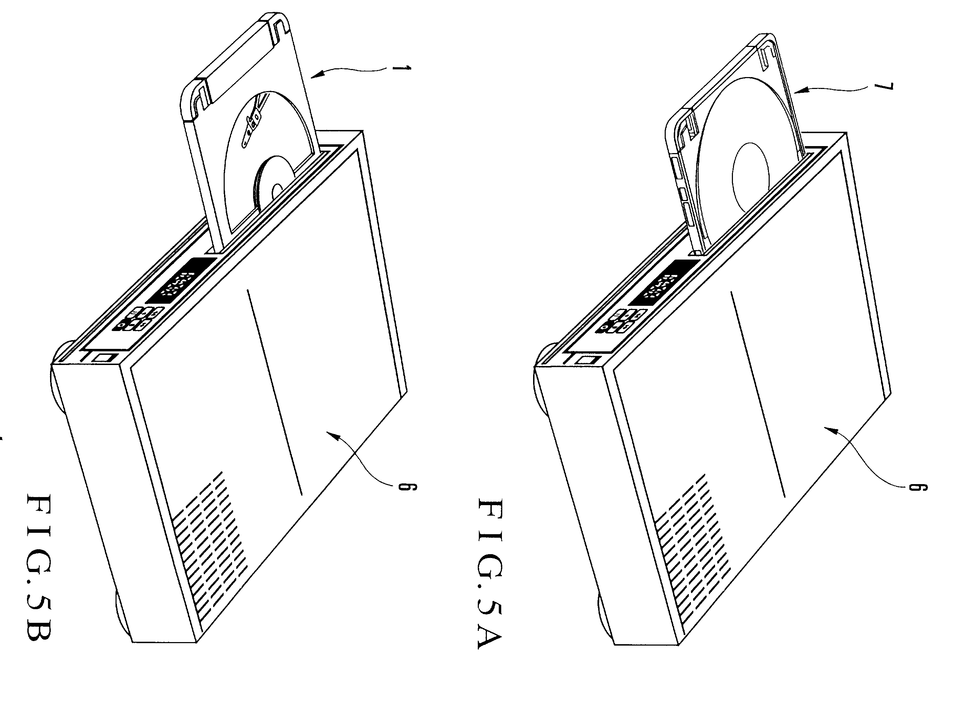

Schematic operation of the first embodiment will be described with reference to Figs. 5A and 5B. As shown in Fig. 5A, a user selects and inserts the optical disk cartridge 7 including the low-cost, low-speed optical disk 8 into the compatible information recording/playback apparatus 6 in accordance with an intended use. As shown in Fig. 5B, the user selects and inserts the high-cost, high-speed magnetic disk drive 1.

The compatible information recording/playback apparatus 6 records, e.g., a digital television program as data on the optical disk 8 in the inserted optical disk cartridge 7 or the magnetic recording medium 2 in the magnetic disk drive 1. In addition, the compatible information recording/playback apparatus 6 plays back contents such as a movie recorded on the optical disk 8 or magnetic recording medium 2.

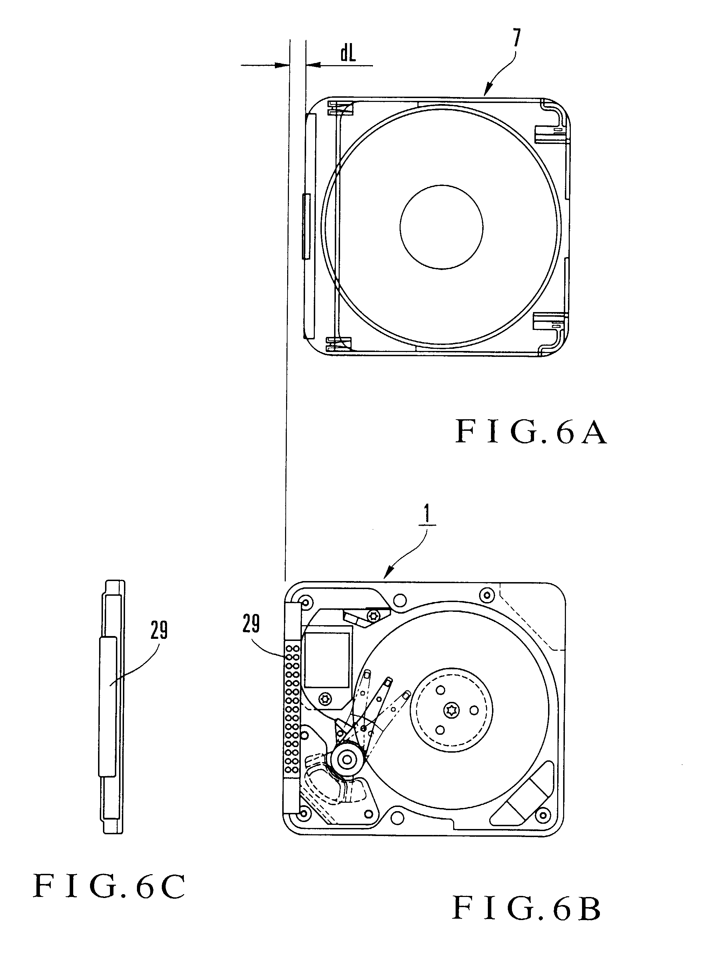

Interface connection between the magnetic disk drive 1 and compatible information recording/playback apparatus 6 will be described in detail with reference to Figs. 6A to 8E.

As shown in Figs. 6A and 6B, the housing of the magnetic disk drive 1 has a size in the loading direction (lateral direction in Figs. 6A and 6B) set longer than the optical disk cartridge 7 by dL. A connector 29 for an interface necessary for supplying power and exchanging control codes and data is attached to the lower surface of the dL portion, as shown in Figs. 6B and 6C.

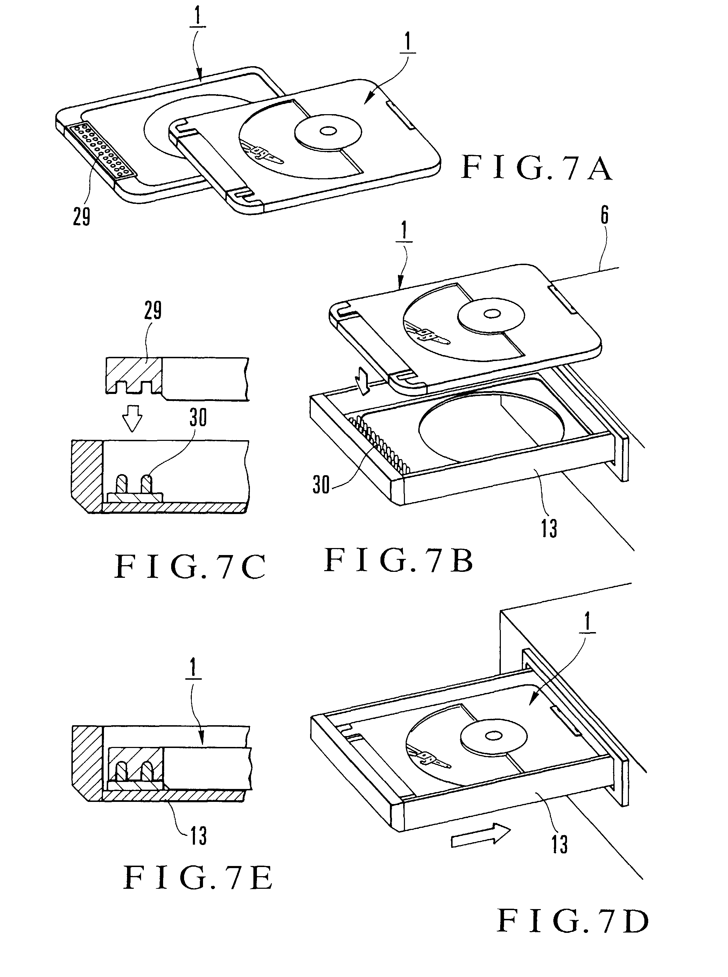

In the compatible information recording/playback apparatus 6, as shown in Figs. 7B and 7C, a tray 13 for mounting the magnetic disk drive 1 or optical disk cartridge 7 has a connector 30 at a position where the connector 30 faces the connector 29 of the magnetic disk drive 1 shown in Fig. 7A when the magnetic disk drive 1 is mounted. The connector 30 is connected to the compatible information recording/playback apparatus 6 via a cable such as an FPC (Flexible Printed Circuit; not shown).

When the magnetic disk drive 1 is mounted at a predetermined position on the tray 13, the connector 29 of the magnetic disk drive 1 engages with the connector 30 of the tray 13 to complete interface connection between the magnetic disk drive 1 and compatible information recording/playback apparatus 6, as shown in Figs. 7D and 7E.

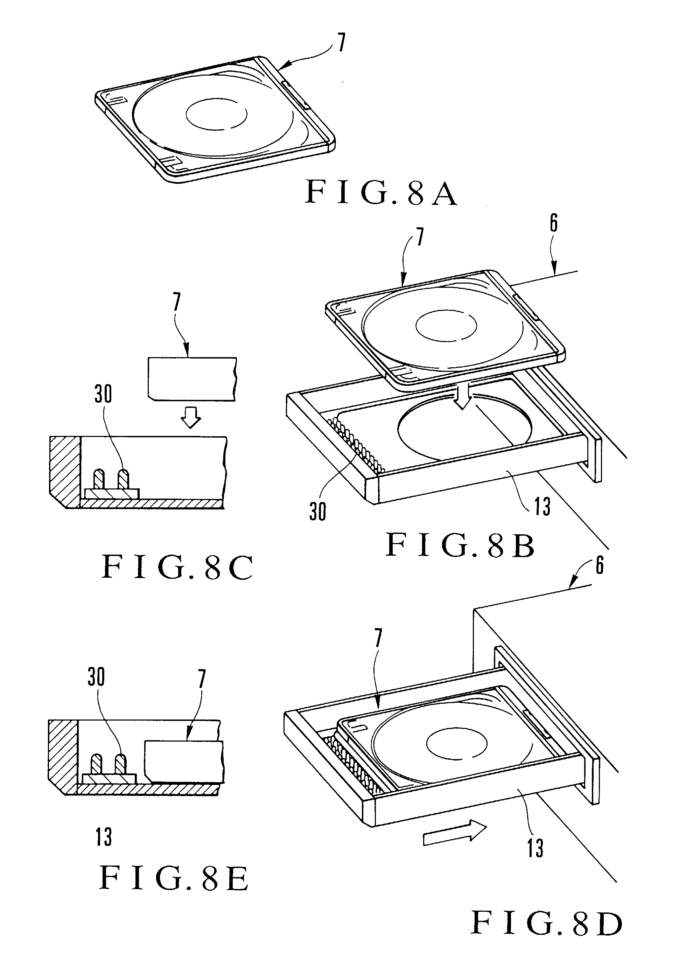

When the optical disk cartridge 7 not requiring any interface except for recording/playback of information by an optical pickup is mounted at a predetermined position on the tray 13, as shown in Figs. 8A to 8E, the connector 30 of the tray 13 is kept open without interfering (engaging) with the optical disk cartridge 7 due to the size difference shown in Figs. 6A and 6B.

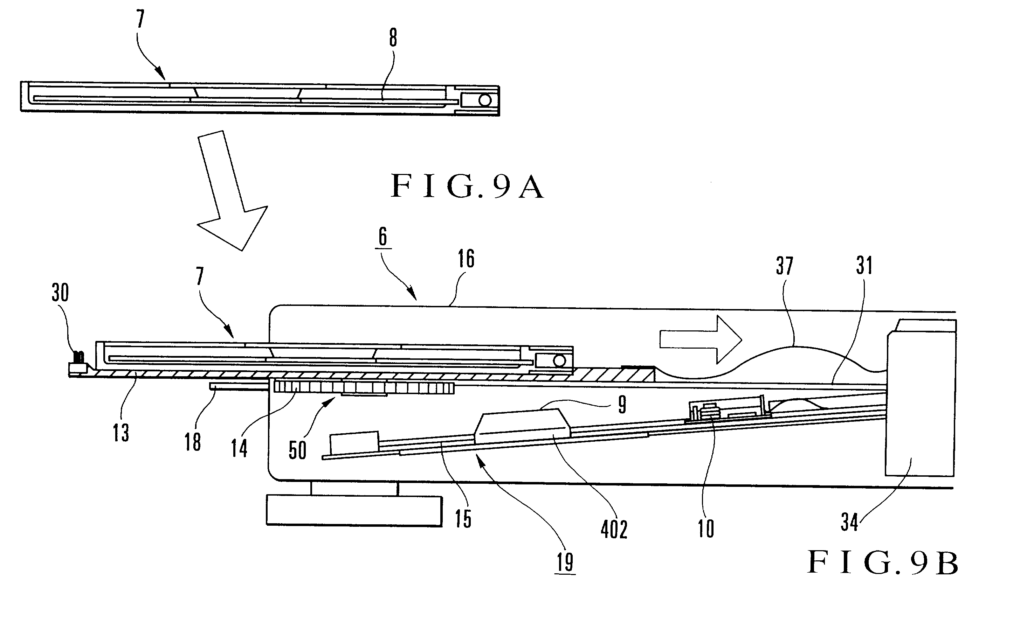

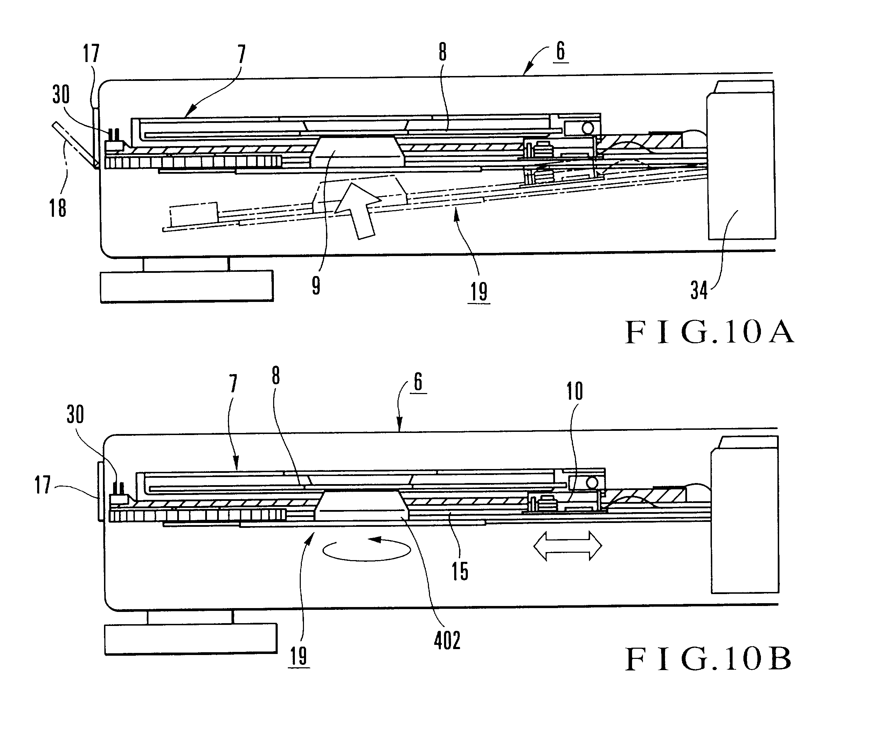

The arrangement of the loading mechanism according to the first embodiment will be described in detail with reference to Figs. 9A to 12B. Loading operation in inserting the optical disk cartridge 7 will be explained with reference to Figs. 9A, 9B, 10A, and 10B.

When the optical disk cartridge 7 (Fig. 9A) incorporating the optical disk 8 is mounted on the tray 13, as shown in Fig. 9B, the optical disk cartridge 7 is loaded into a frame unit 16 of the compatible information recording/playback apparatus 6 along a tray guide rail 31 by a load gear 14 for driving the tray 13 in the loading direction (lateral direction in Fig. 9B). The tray 13, load gear 14, and tray guide rail 31 constitute a loading mechanism 50.

An optical drive unit 19 is made up of an optical pickup 10 for recording/playing back information on/from the optical disk 8, a CD turntable 9 for rotating the optical disk 8, and a spindle motor 402 for rotating the CD turntable 9. The CD turntable 9 is formed integrally with an upper portion of the spindle motor 402.

After loading the optical disk cartridge 7, the optical drive unit 19 moves up from a position indicated by a broken line to a position indicated by a solid line by a pop-up mechanism 34, as shown in Fig. 10A. The CD turntable 9 is pressed against the optical disk 8 to fix the optical disk 8 to the CD turntable 9. At the same time, the optical pickup 10 faces the surface of the optical disk 8. Although not shown, the optical pickup 10 has a known arrangement including an objective lens and actuator unit for driving it.

As shown in Fig. 10B, the optical disk 8 is rotated by the spindle motor 402, and positioning of the objective lens of the optical pickup 10 starts. Accordingly, preparation for recording/playback of information is complete.

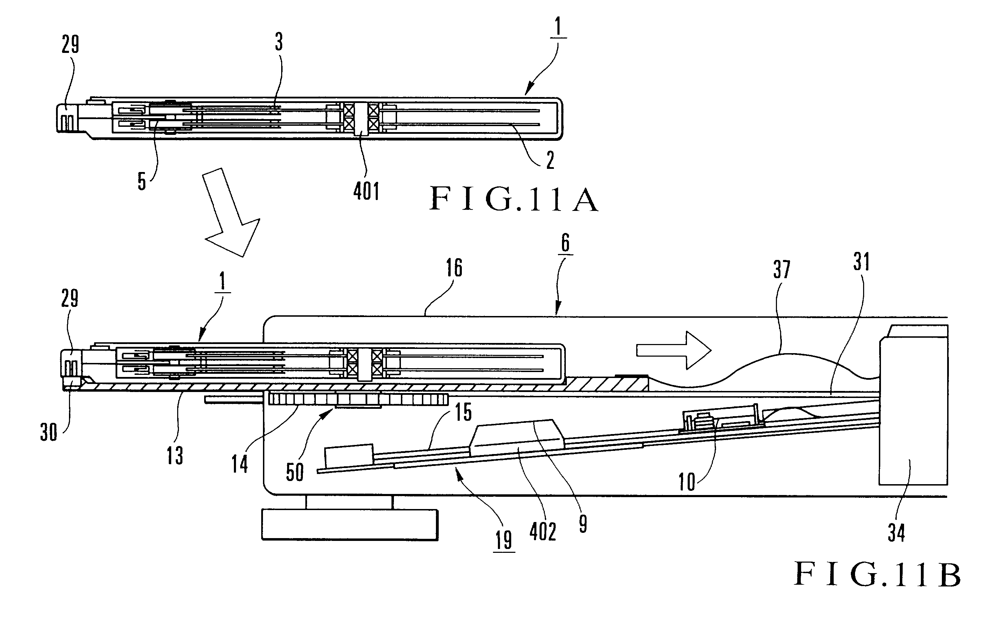

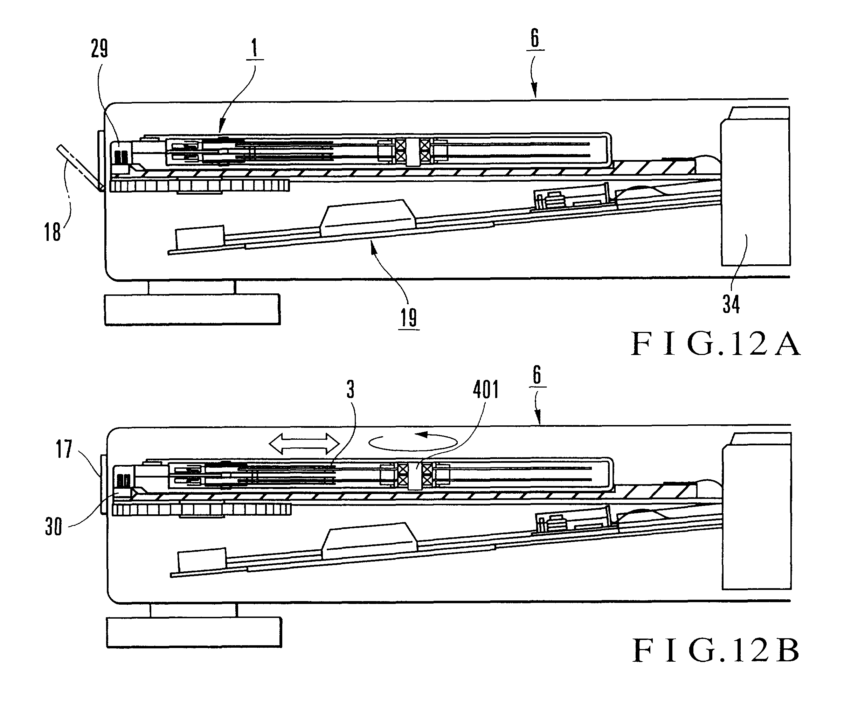

Loading operation in inserting the magnetic disk drive 1 will be explained with reference to Figs. 11A, 11B, 12A, and 12B.

The magnetic disk drive 1 (Fig. 11A) incorporating the magnetic recording medium 2 is loaded by the loading mechanism 50, as shown in Fig. 11B. That is, when the magnetic disk drive 1 is mounted on the tray 13, the magnetic disk drive 1 is loaded into the frame unit 16 of the compatible information recording/playback apparatus 6 along the tray guide rail 31 by the load gear 14 for driving the tray 13 in the loading direction (lateral direction in Fig. 11B).

When the magnetic disk drive 1 is inserted, the optical drive unit 19 does not move up, as shown in Fig. 12A. After loading the magnetic disk drive 1, the magnetic recording medium 2 is rotated by the spindle motor 401 incorporated in the magnetic disk drive 1, and the actuator 5 shown in Fig. 2 starts positioning the magnetic head 3, as shown in Fig. 12B. Consequently, preparation for recording/playback of information is complete.

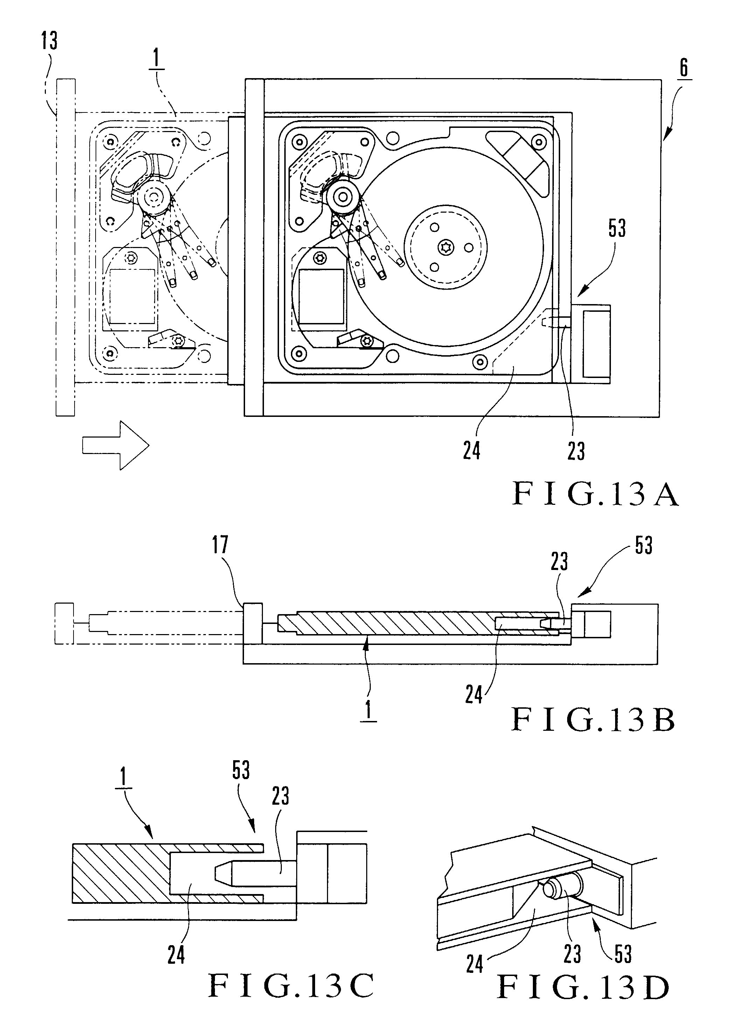

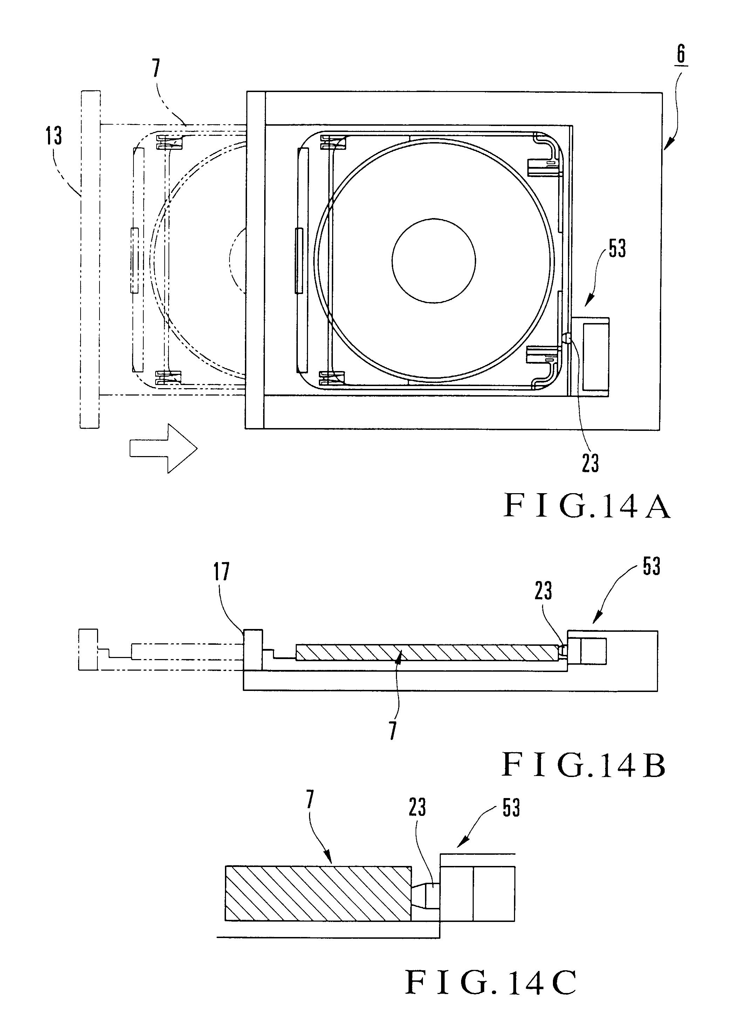

The arrangement of an inserted-medium determination mechanism according to the first embodiment will be described in detail with reference to Figs. 13A to 13D and 14A to 14C.

As shown in Figs. 13A and 13B, a detection groove 24 is horizontally formed at one corner of the insertion side on the housing of the magnetic disk drive 1. An identification switch pin 23 serving as a mechanical switch is disposed in the insertion port of the compatible information recording/playback apparatus 6 in correspondence with the detection groove 24 of the magnetic disk drive 1. The detection groove 24 and identification switch pin 23 constitute a mechanism of determining the type of inserted recording medium.

The magnetic disk drive 1 mounted on the tray 13 is loaded into the compatible information recording/playback apparatus 6 by the loading mechanism 50. At this time, as shown in Figs. 13C and 13D, the identification switch pin 23 disposed at a position where it faces the detection groove 24 of the magnetic disk drive 1 does not contact the housing of the magnetic disk drive 1 because of the presence of the detection groove 24, and is kept off even after loading the magnetic disk drive 1.

To the contrary, the optical disk cartridge 7 does not have any detection groove, as shown in Figs. 14A and 14B. Therefore, after loading the optical disk cartridge 7, the identification switch pin 23 is pressed and turned on by the optical disk cartridge 7, as shown in Fig. 14C.

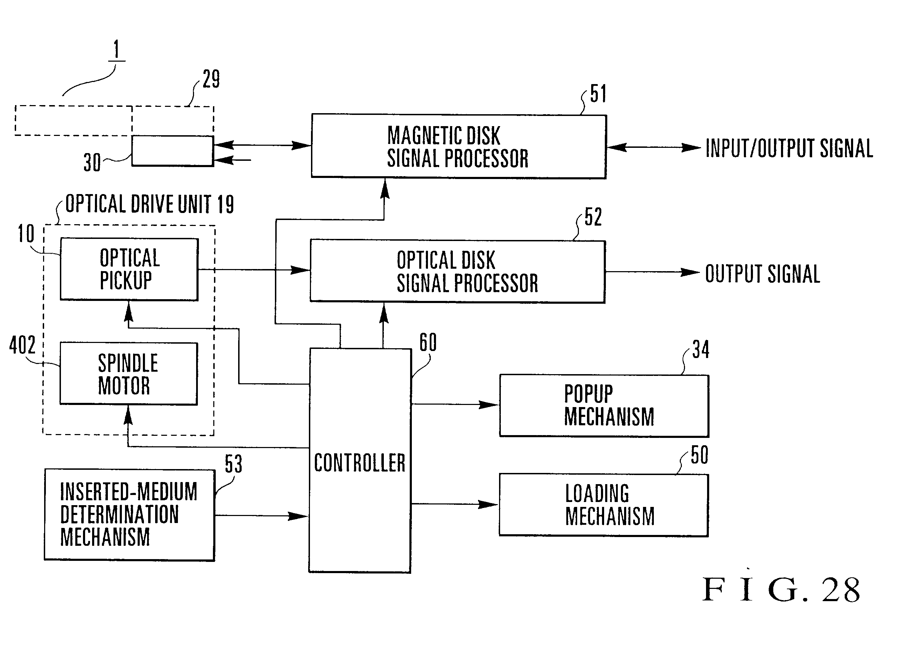

Fig. 28 shows the compatible information recording/playback apparatus 6 in Figs. 3A and 3B. In Fig. 28, a magnetic disk signal processor 51 encodes/decodes a write/readout signal in/from the magnetic disk drive 1 via the connectors 29 and 30. An optical disk signal processor 52 decodes an optical disk signal read out by the optical pickup 10. For a readable/writable optical disk, the optical disk signal processor 52 encodes/decodes a write/readout signal.

A controller 60 made from a CPU (Central Processing Unit) determines in accordance with an output from the identification switch pin 23 of an inserted-medium determination mechanism 53 whether a loaded recording medium is a magnetic disk drive 1 or optical disk cartridge 7. That is, the controller 60 determines the inserted medium as the magnetic recording medium 2 if the identification switch pin 23 is not depressed, or as the optical disk 8 if the identification switch pin 23 is depressed.

When the controller 60 determines insertion of the optical disk cartridge 7, it drives the pop-up mechanism 34 and spindle motor 402. When a recording medium is mounted on the tray 13, the controller 60 controls operation of the loading mechanism 50.

Since the magnetic disk drive 1 of the first embodiment has the detection groove 24, whether a medium inserted in the compatible information recording/playback apparatus 6 is a magnetic disk drive 1 or optical disk cartridge 7 can be identified by providing the identification switch pin 23 to the compatible information recording/playback apparatus 6.

Operation of the compatible information recording/playback apparatus 6 according to the first embodiment will be described.

A user selects the optical disk cartridge 7 storing the low-cost, low-speed optical disk 8 or the high-cost, high-speed magnetic disk drive 1 in accordance with a recording/playback purpose.

Operation when the user selects the magnetic disk drive 1 will be described. The user mounts the magnetic disk drive 1 at a predetermined position on the tray 13 with respect to the loading mechanism 50 of the compatible information recording/playback apparatus 6.

At this time, the connector 29 of the magnetic disk drive 1 engages with the connector 30 of the tray 13. Since the connector 30 is connected to the compatible information recording/playback apparatus 6 via a connection cable 37 such as an FPC, the magnetic disk drive 1 is electrically connected to the information recording/playback apparatus 6. Then, power is supplied from the compatible information recording/playback apparatus 6 to the magnetic disk drive 1 to exchange data between the compatible information recording/playback apparatus 6 and magnetic disk drive 1.

The magnetic disk drive 1 mounted on the tray 13 is loaded into the frame unit 16 of the compatible information recording/playback apparatus 6 along the tray guide rail 31 by the load gear 14 for driving the tray 13 in the loading direction.

The identification switch pin 23 disposed at a position where it faces the detection groove 24 of the magnetic disk drive 1 does not contact the housing of the magnetic disk drive 1 because of the detection groove 24, and is kept off even after loading the magnetic disk drive 1.

When the identification switch pin 23 is not depressed upon completion of loading operation, the controller 60 (Fig. 28) of the compatible information recording/playback apparatus 6 determines the inserted medium as the magnetic recording medium 2. As a result, the controller instructs a host operation system or the like to start operation necessary for recording/playing back information such as mount of the magnetic disk drive 1 or the like. Since the inserted medium is the magnetic disk drive 1 (magnetic recording medium 2), the controller 60 does not instruct the pop-up mechanism 34 to move up the optical drive unit 19.

After loading the magnetic disk drive 1, the magnetic recording medium 2 is rotated by the spindle motor 401 incorporated in the magnetic disk drive 1, and the actuator 5 starts positioning the magnetic head 3, as shown in Fig. 12B. Thus, information is recorded/played back on/from the magnetic recording medium 2.

Operation when the user selects the optical disk cartridge 7 will be described.

The user mounts the optical disk cartridge 7 at a predetermined position on the tray 13 with respect to the loading mechanism 50 of the compatible information recording/playback apparatus 6. At this time, the connector 30 of the tray 13 unnecessary for recording/playback of the optical disk 8 is kept open without interfering (engaging) with the optical disk cartridge 7 because of the size different between the magnetic disk drive 1 and optical disk cartridge 7.

When the optical disk cartridge 7 is mounted on the tray 13 constituting the loading mechanism 50, it is loaded into the frame unit 16 of the compatible information recording/playback apparatus 6 along the tray guide rail 31 by the load gear 14 for driving the tray 13 in the loading direction.

Since the optical disk cartridge 7 does not have any detection groove, the identification switch pin 23 is depressed and turned on by the optical disk cartridge 7 after loading the optical disk cartridge 7. When the identification switch pin 23 is depressed upon completion of loading operation, the controller (Fig. 28) of the compatible information recording/playback apparatus 6 determines the inserted medium as the optical disk 8.

As a result of determining the inserted medium as the optical disk 8, the controller 60 of the compatible information recording/playback apparatus 6 instructs the pop-up mechanism 34 to move up the optical drive unit 19. As the optical drive unit 19 moves up, the CD turntable 9 is pressed against the optical disk 8 to fix the optical disk 8 to the CD turntable 9.

After that, the optical disk 8 is rotated by the spindle motor 402 driven by the controller 60, and positioning of the objective lens of the optical pickup 10 starts. In this way, information is recorded/played back on/from the optical disk 8.

### [Second Embodiment]

The second embodiment of the present invention will be described.

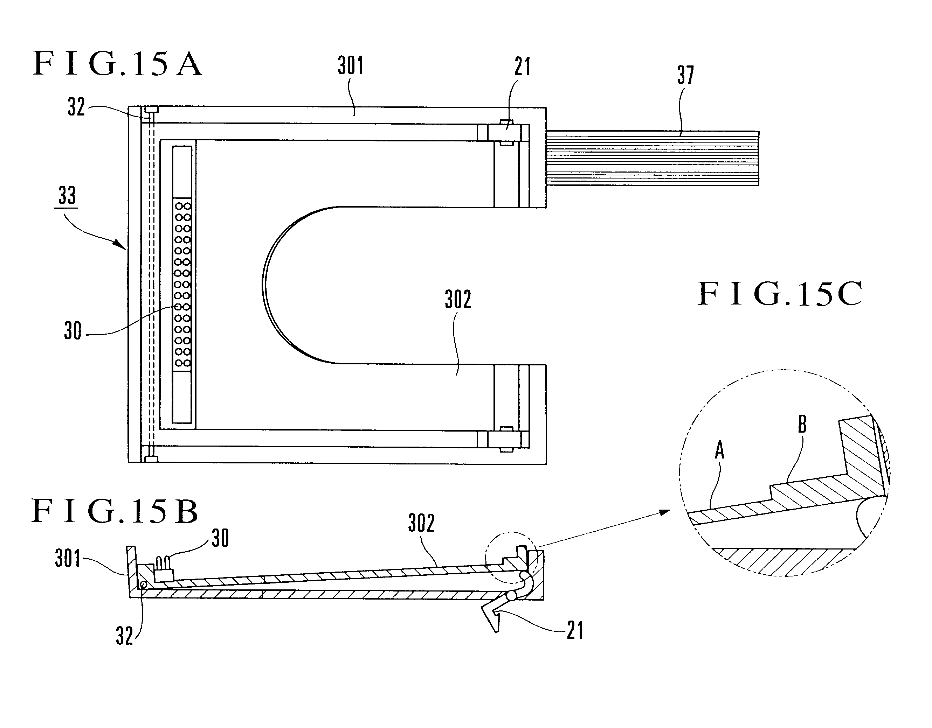

Also in the second embodiment, the whole arrangement of the compatible information recording/playback apparatus is almost the same as in the first embodiment. The arrangement of the loading mechanism according to the second embodiment will be described with reference to Figs. 15A to 18B.

As shown in Fig. 15A, a slant tray 33 for mounting a magnetic disk drive 1 or optical disk cartridge 7 comprises an outer tray 301, an inner tray 302, an S-shaped lift hook 21 axially supported by the outer tray 301 to lift up or down the inner tray 302, a connector 30 for the magnetic disk drive 1, and a rotary pin 32 rotatably supporting the inner tray 302.

The lift hook 21 has a spring (not shown). The elasticity of the spring keeps the upper end of the lift hook 21 lifting up the inner tray 302. The lower end of the lift hook 21 faces the distal end of a lift switch pin 22 horizontally attached to a frame unit 16 of a compatible information recording/playback apparatus 6a. The lift hook 21 and lift switch pin 22 constitute an inserted-medium determination mechanism 53.

The connector 30 is connected to the compatible information recording/playback apparatus via a connection cable 37 such as an FPC. The rotary pin 32 extends through the through hole of the inner tray 302, and the two ends of the rotary pin 32 are fixed to the outer tray 301. Hence, the inner tray 302 is axially supported by the outer tray 301.

The housing of the magnetic disk drive 1 except for a connector 29 has a length, i.e., size in the loading direction slightly larger than the optical disk cartridge 7. Steps defined by surfaces A and B are formed at the leading end of the inner tray 302 in accordance with the difference in length, as shown in Fig. 15C. The optical disk cartridge 7 is placed on the surface A, and the magnetic disk drive 1 is placed on the surface B.

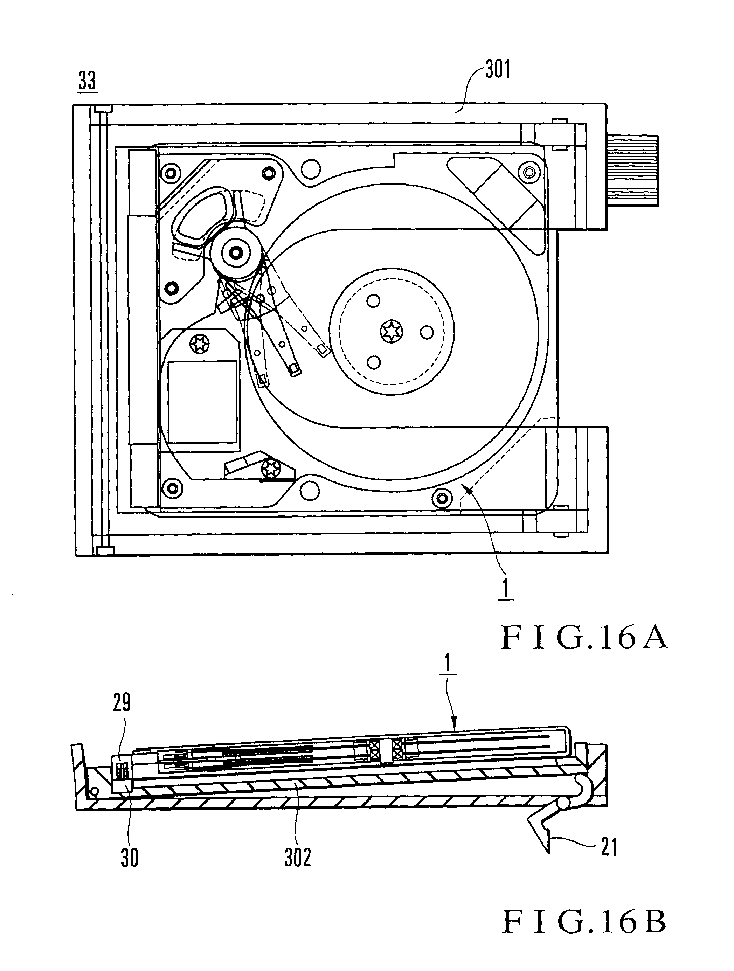

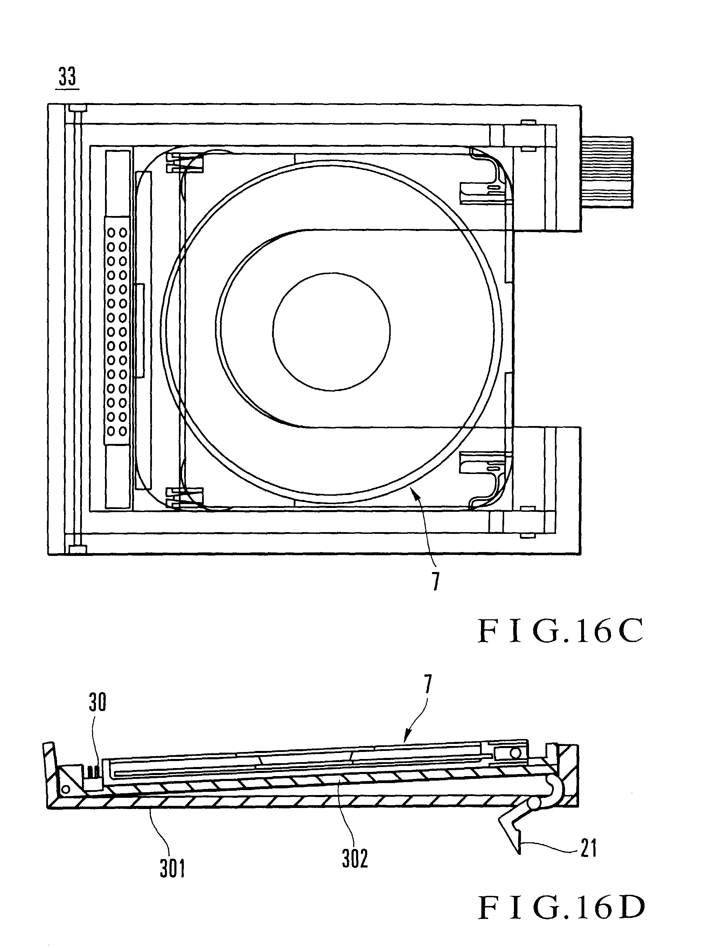

When, therefore, the magnetic disk drive 1 is mounted on the slant tray 33, the leading end of the magnetic disk drive 1 is held at a position higher than the surface A of the inner tray 302, as shown in Figs. 16A and 16B. When the optical disk cartridge 7 is mounted on the slant tray 33, the leading end of the optical disk cartridge 7 is held by the surface A of the inner tray 302, as shown in Figs. 16C and 16D.

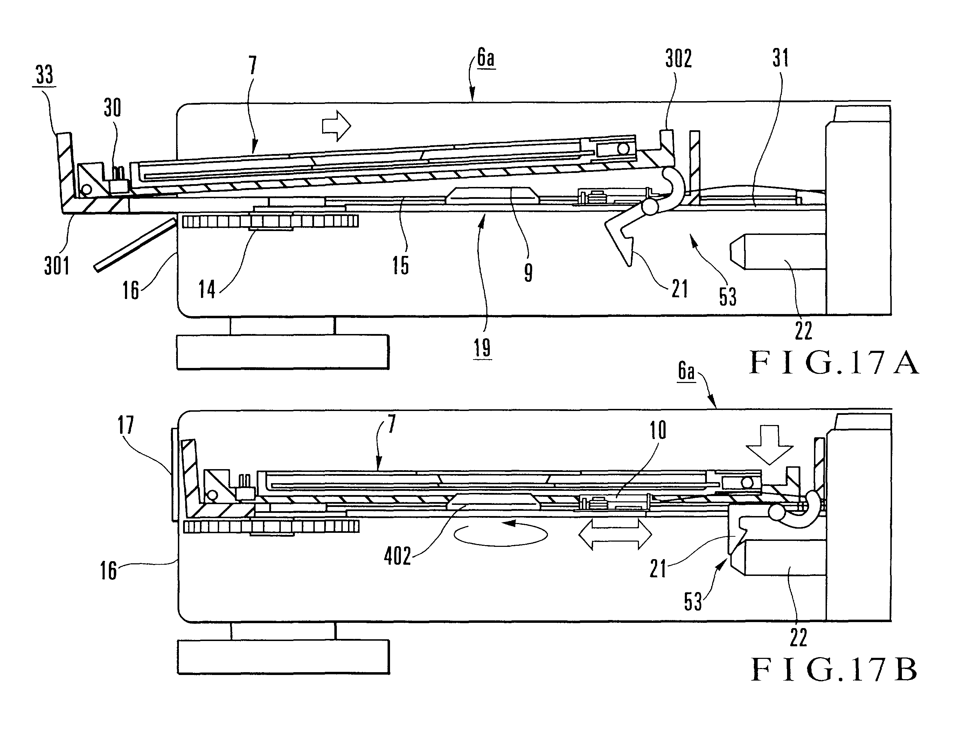

Loading operation in inserting the optical disk cartridge 7 will be explained with reference to Figs. 17A and 17B.

Also in the second embodiment, an optical drive unit 19 in the compatible information recording/playback apparatus 6a has the same arrangement as in the first embodiment except that the optical drive unit 19 of the second embodiment is fixed at a predetermined position, unlike the first embodiment.

When the optical disk cartridge 7 is mounted on the inner tray 302 of the slant tray 33, as shown in Fig. 17A, the optical disk cartridge 7 is loaded into the frame unit 16 of the compatible information recording/playback apparatus 6a along a tray guide rail 31 by a load gear 14 for driving the slant tray 33 in the loading direction (lateral direction in Fig. 17A).

When the slant tray 33 moves, the lower end of the lift hook 21 is depressed by the lift switch pin 22 disposed in the compatible information recording/playback apparatus 6a, and pivots about the shaft clockwise in Fig. 17B. Then, the upper end of the lift hook 21 is separated from the inner tray 302 to bring the lifted-up inner tray 302 into horizontal contact with the outer tray 301, as shown in Fig. 17B.

At this time, an optical disk 8 is pressed against and fixed to a CD turntable 9. As shown in Fig. 17B, the optical disk 8 is rotated by a spindle motor 402, and positioning of the objective lens of an optical pickup 10 starts. As a result, preparation for recording/playback of information is complete.

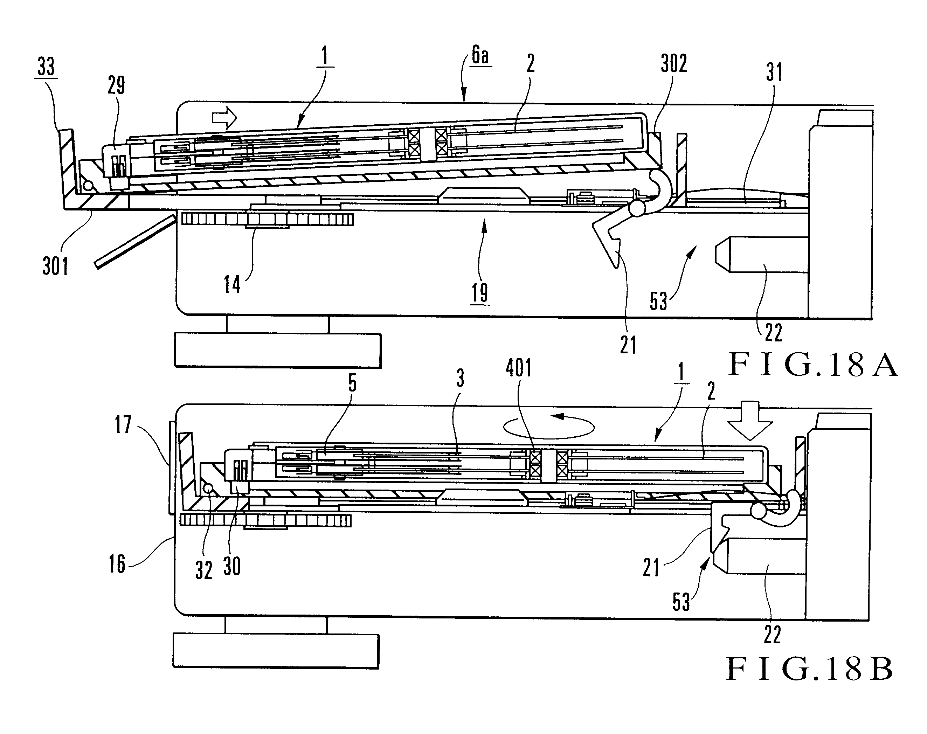

Loading operation in inserting the magnetic disk drive 1 will be explained with reference to Figs. 18A and 18B.

When the magnetic disk drive 1 is mounted on the slant tray 33, as shown in Fig. 18A, the magnetic disk drive 1 is loaded into the frame unit 16 of the compatible information recording/playback apparatus 6a along the tray guide rail 31 by the load gear 14 for driving the slant tray 33 in the loading direction (lateral direction in Figs. 18A and 18B).

When the slant tray 33 moves, the lift hook 21 is depressed by the lift switch pin 22 disposed in the compatible information recording/playback apparatus 6a, and rotates about the shaft. Then, the inner tray 302 lifted up by the lift hook 21 comes into horizontal contact with the outer tray 301, as shown in Fig. 18B. Since the magnetic disk drive 1 is held at a position higher than the optical disk cartridge 7 by the surface B (Fig. 15C), the magnetic disk drive 1 does not contact the optical drive unit 19.

After loading the magnetic disk drive 1, the magnetic recording medium 2 is rotated by a spindle motor 401 incorporated in the magnetic disk drive 1, and an actuator 5 starts positioning a magnetic head 3, as shown in Fig. 18B. In this fashion, preparation for recording/playback of information is complete.

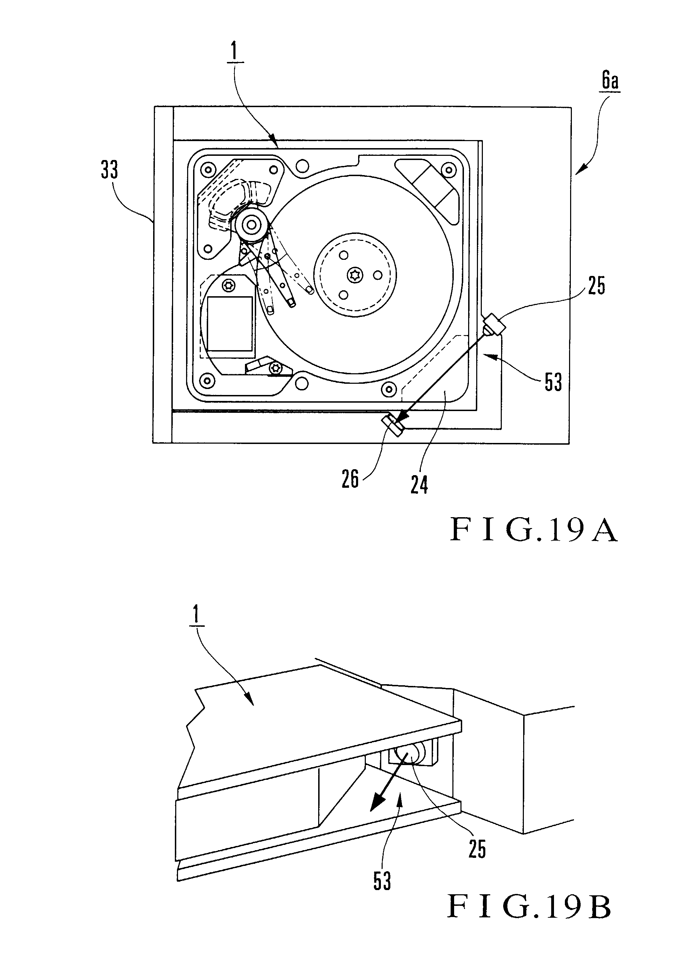

The arrangement of the inserted-medium determination mechanism according to the second embodiment will be described in detail with reference to Figs. 19A and 19B.

Similar to the first embodiment, a detection groove 24 is formed in the housing of the magnetic disk drive 1. As shown in Fig. 19A, a laser-emitting element 25, and laser-receiving element 26 facing it are disposed in the groove direction at positions where they face the detection groove 24 in the compatible information recording/playback apparatus 6a. The laser-emitting element 25 and laser-receiving element 26 constitute an optical switch. A laser beam emitted by the laser-emitting element 25 reaches the laser-receiving element 26. The detection groove 24, laser-emitting element 25, and laser-receiving element 26 constitute the inserted-medium determination mechanism 53.

The magnetic disk drive 1 mounted on the slant tray 33 is loaded into the compatible information recording/playback apparatus 6a by the above-described loading mechanism 50. At this time, since the magnetic disk drive 1 has the detection groove 24, a laser beam emitted by the laser-emitting element 25 passes through the detection groove 24 to reach the laser-receiving element 26, and the optical switch is kept on even upon completion of loading.

On the other hand, since the optical disk cartridge 7 does not have any detection groove, a laser beam emitted by the laser-emitting element 25 is shielded by the optical disk cartridge 7 not to reach the laser-receiving element 26 after loading the optical disk cartridge 7.

A controller 60 (Fig. 28) of the compatible information recording/playback apparatus 6a determines an inserted medium as a magnetic recording medium 2 when the laser-receiving element 26 detects a laser beam, or as an optical disk 8 when the laser-receiving element 26 does not detect any laser beam.

Since the magnetic disk drive 1 of the second embodiment has the detection groove 24, whether a medium inserted in the compatible information recording/playback apparatus 6a is a magnetic disk drive 1 or optical disk cartridge 7 can be identified in a noncontact state by providing the laser-emitting element 25 and laser-receiving element 26 to the compatible information recording/playback apparatus 6a.

Operation of the compatible information recording/playback apparatus 6a according to the second embodiment will be described.

A user selects the optical disk cartridge 7 storing the low-cost, low-speed optical disk 8 or the high-cost, high-speed magnetic disk drive 1 in accordance with a recording/playback purpose.

Operation when the user selects the magnetic disk drive 1 will be described.

When the slant tray 33 on which the magnetic disk drive 1 is mounted is loaded, the lift hook 21 is depressed by the lift switch pin 22 disposed in the compatible information recording/playback apparatus 6a, and rotates about the shaft. The inner tray 302 lifted up by the lift hook 21 comes into horizontal contact with the outer tray 301.

Since the magnetic disk drive 1 is held at a position higher than the optical disk cartridge 7 by the surface B, the magnetic disk drive 1 does not contact the optical drive unit 19. Since the magnetic disk drive 1 has the detection groove 24, a laser beam emitted by the laser-emitting element 25 passes through the detection groove 24 to reach the laser-receiving element 26 upon completion of loading.

The controller 60 (Fig. 28) of the compatible information recording/playback apparatus 6a determines the inserted medium as the magnetic recording medium 2 when the laser-receiving element 26 detects a laser beam. As a result, the controller 60 instructs a host operation system or the like to start operation necessary for recording/playing back information such as mount of the magnetic disk drive 1 or the like.

Since the inserted medium is recognized as the magnetic disk drive 1, the magnetic recording medium 2 is rotated by the spindle motor 401 of the magnetic disk drive 1, and the actuator 5 starts positioning the magnetic head 3. Thus, information can be recorded/played back on/from the magnetic recording medium 2.

Operation when the user selects the optical disk cartridge 7 will be described.

When the slant tray 33 on which the optical disk cartridge 7 is mounted is loaded, the lift hook 21 is depressed by the lift switch pin 22 disposed in the compatible information recording/playback apparatus 6a, and rotates about the shaft. The inner tray 302 lifted up by the lift hook 21 comes into horizontal contact with the outer tray 301.

At this time, the optical disk 8 is pressed against and fixed to the CD turntable 9. Since the optical disk cartridge 7 does not have any detection groove, a laser beam emitted by the laser-emitting element 25 is shield by the optical disk cartridge 7 not to reach the laser-receiving element 26 after loading the optical disk cartridge 7.

The controller 60 (Fig. 28) of the compatible information recording/playback apparatus 6a determines the inserted medium as the optical disk 8 when the laser-receiving element 26 does not detect any laser beam. Therefore, the optical disk 8 is rotated by the spindle motor 402, and positioning of the objective lens of the optical pickup 10 starts. In this manner, information can be recorded/played back on/from the optical disk 8.

### [Third Embodiment]

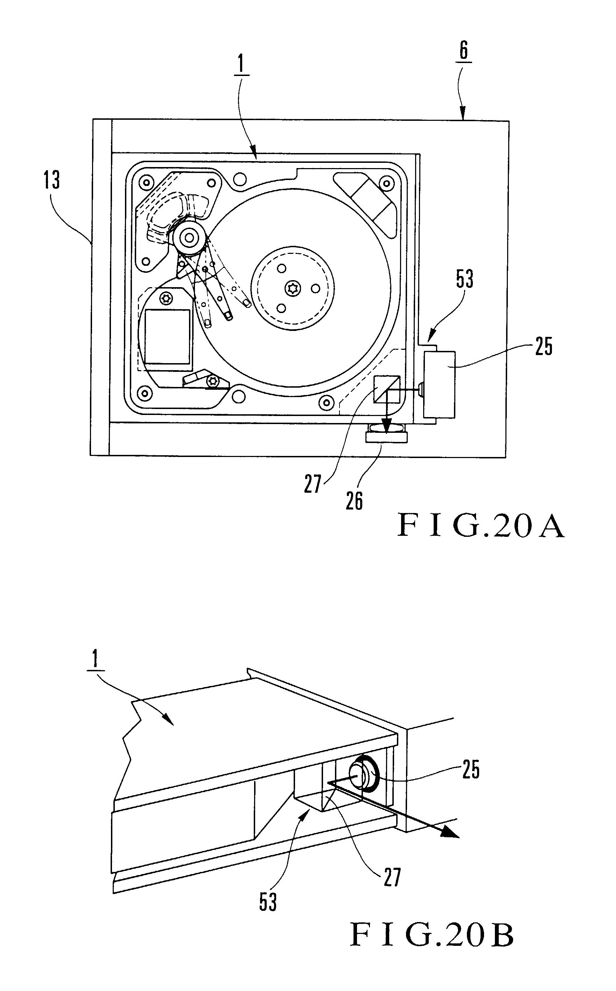

The arrangement of an inserted-medium determination mechanism according to the third embodiment of the present invention will be described in detail with reference to Figs. 20A and 20B.

As shown in Fig. 20A, a prism 27 serving as a light reflection portion is disposed at one corner of the front end of a magnetic disk drive 1. A laser-emitting element 25 and a laser-receiving element 26 having a laser-receiving direction perpendicular to the optical axis of a laser beam from the laser-emitting element 25 are disposed in the insertion port of a compatible information recording/playback apparatus 6 in correspondence with the prism 27 of the magnetic disk drive 1. The laser-emitting element 25 and laser-receiving element 26 constitute an optical switch. The laser-emitting element 25, laser-receiving element 26, and prism 27 constitute an inserted-medium determination mechanism 53.

The magnetic disk drive 1 mounted on a tray 13 is loaded into the compatible information recording/playback apparatus 6 by the same loading mechanism 50 as in the first embodiment. At this time, a laser beam emitted by the laser-emitting element 25 is reflected by the prism 27 to reach the laser-receiving element 26 upon completion of loading, thereby turning on the optical switch.

On the other hand, since an optical disk cartridge 7 does not have any prism, a laser beam emitted by the laser-emitting element 25 does not reach the laser-receiving element 26 after loading the optical disk cartridge 7.

The controller (Fig. 28) of the compatible information recording/playback apparatus 6 determines an inserted medium as a magnetic recording medium 2 when the laser-receiving element 26 detects a laser beam, or as an optical disk 8 when the laser-receiving element 26 does not detect any laser beam.

Since the magnetic disk drive 1 of the third embodiment has the prism 27, whether a medium inserted in the compatible information recording/playback apparatus 6 is a magnetic disk drive 1 or optical disk cartridge 7 can be identified by providing the laser-emitting element 25 and laser-receiving element 26 to the compatible information recording/playback apparatus 6.

In the third embodiment, the inserted-medium determination mechanism is combined with the compatible information recording/playback apparatus 6 of the first embodiment having the pop-up mechanism 34, but may be combined with the compatible information recording/playback apparatus 6a of the second embodiment having the slant tray 33.

### [Fourth Embodiment]

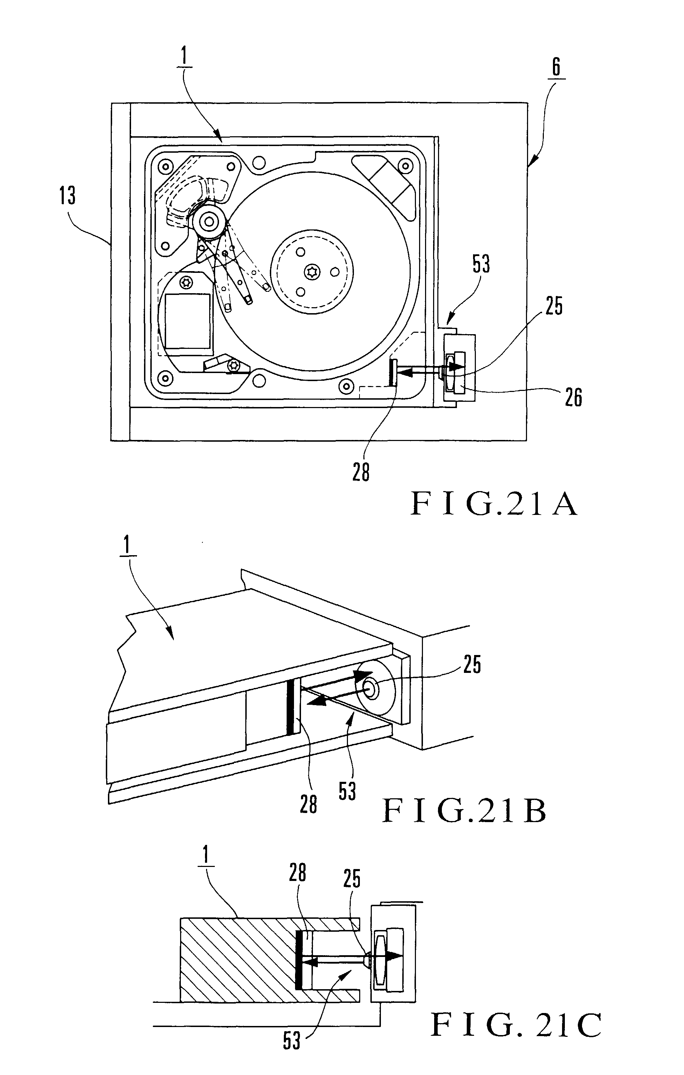

The arrangement of an inserted-medium determination mechanism according to the fourth embodiment of the present invention will be described in detail with reference to Figs. 21A and 21B.

As shown in Fig. 21A, a mirror 28 serving as a light reflection portion is disposed at one corner of the front end of a magnetic disk drive 1. A laser-emitting element 25, and laser-receiving element 26 for receiving a laser beam reflected by the mirror 28, which elements constitute an optical switch, are disposed at positions where the laser-emitting element 25 and laser-receiving element 26 face the mirror 28 in the insertion port of a compatible information recording/playback apparatus 6 (back scattering method). The laser-emitting element 25, laser-receiving element 26, and mirror 28 constitute an inserted-medium determination mechanism 53.

The magnetic disk drive 1 mounted on a tray 13 is loaded into the compatible information recording/playback apparatus 6 by the same loading mechanism 50 as in the first embodiment. A laser beam emitted by the laser-emitting element 25 is reflected by the mirror 28 to reach the laser-receiving element 26 behind the laser-emitting element 25 upon completion of loading, thereby turning on the optical switch.

On the other hand, since an optical disk cartridge 7 does not have any mirror, a laser beam emitted by the laser-emitting element 25 does not reach the laser-receiving element 26 after loading the optical disk cartridge 7.

A controller 60 (Fig. 28) of the compatible information recording/playback apparatus 6 determines an inserted medium as a magnetic recording medium 2 when the laser-receiving element 26 detects a laser beam, or as an optical disk 8 when the laser-receiving element 26 does not detect any laser beam.

Since the magnetic disk drive 1 of the fourth embodiment has the mirror 28, whether a medium inserted in the compatible information recording/playback apparatus 6 is a magnetic disk drive 1 or optical disk cartridge 7 can be identified by providing the laser-emitting element 25 and laser-receiving element 26 to the compatible information recording/playback apparatus 6.

In the fourth embodiment, the inserted-medium determination mechanism is combined with the compatible information recording/playback apparatus 6 of the first embodiment having the pop-up mechanism 34, but may be combined with the compatible information recording/playback apparatus 6a of the second embodiment having the slant tray 33.

### [Fifth Embodiment]

The fifth embodiment of the present invention will be described below.

In the present invention, the outer shape of a magnetic disk drive is different from an existing one but almost the same as an optical disk cartridge. Hence, the magnetic disk drive can be compatibly loaded without greatly modifying a loading mechanism of loading an optical disk while directly mounting the optical disk on the tray without storing it in an optical disk cartridge.

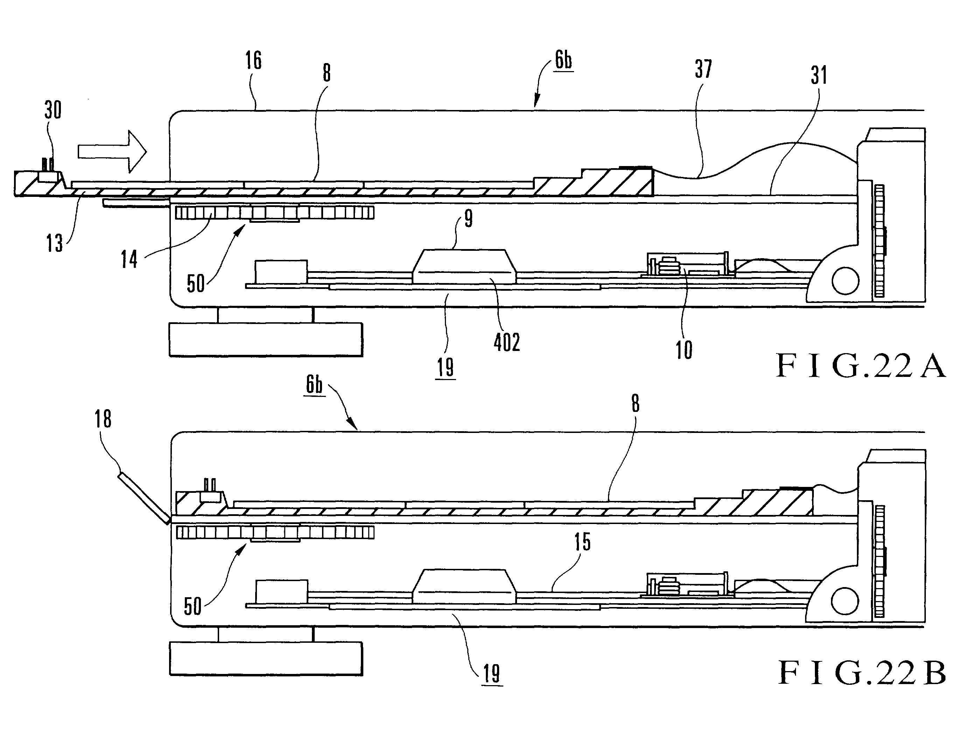

The arrangement of a loading mechanism according to the fifth embodiment will be described in detail with reference to Figs. 22A to 25.

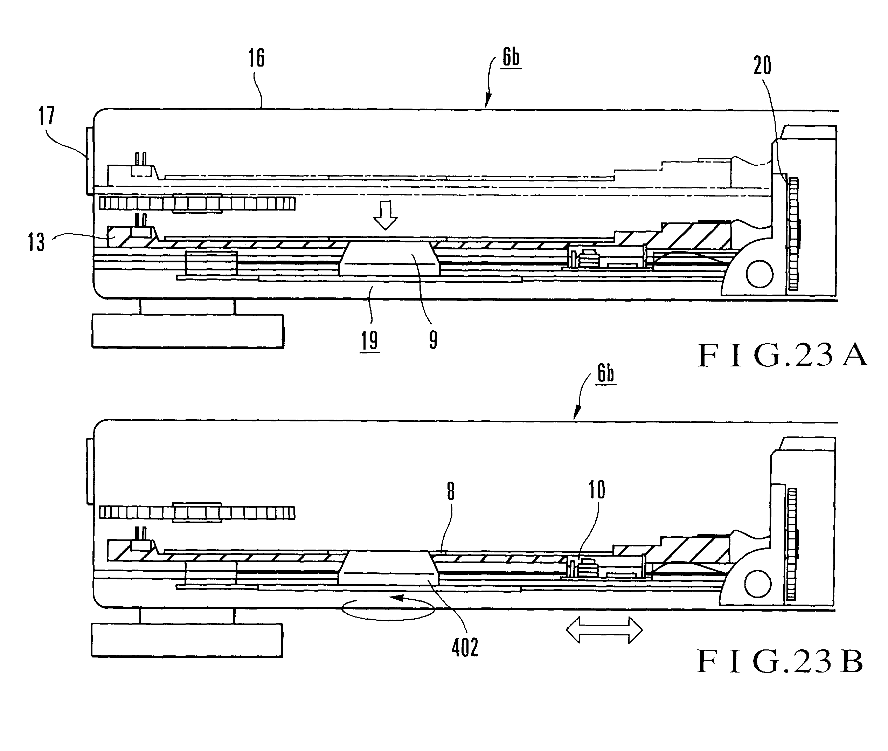

Loading operation in inserting an optical disk 8 will be explained with reference to Figs. 22A, 22B, 23A, and 23B.

When the optical disk 8 is mounted on a tray 13 constituting a loading mechanism 50, the optical disk 8 is loaded into a frame unit 16 of a compatible information recording/playback apparatus 6b along a tray guide rail 31 by a load gear 14 for driving the tray 13 in the loading direction (lateral direction in Figs. 22A and 22B), as shown in Figs. 22A and 22B.

Also in the fifth embodiment, an optical drive unit 19 in the compatible information recording/playback apparatus 6b has the same arrangement as in the first embodiment except that the optical drive unit 19 of the fifth embodiment is fixed below the tray guide rail 31, unlike the first embodiment.

When a controller 60 (Fig. 28) of the compatible information recording/playback apparatus 6b determines the inserted medium as the optical disk 8 by the inserted-medium determination mechanism 53 described in any one of the first to fourth embodiments, it instructs a lift mechanism 20 to move down the tray 13. Then, the tray 13 starts moving down, as shown in Fig. 23A. As the tray 13 moves down, the optical disk 8 is pressed against and fixed to a CD turntable 9.

As shown in Fig. 23B, the optical disk 8 is rotated by a spindle motor 402, and positioning of the objective lens of an optical pickup 10 starts. In this way, information is recorded/played back on/from the optical disk 8.

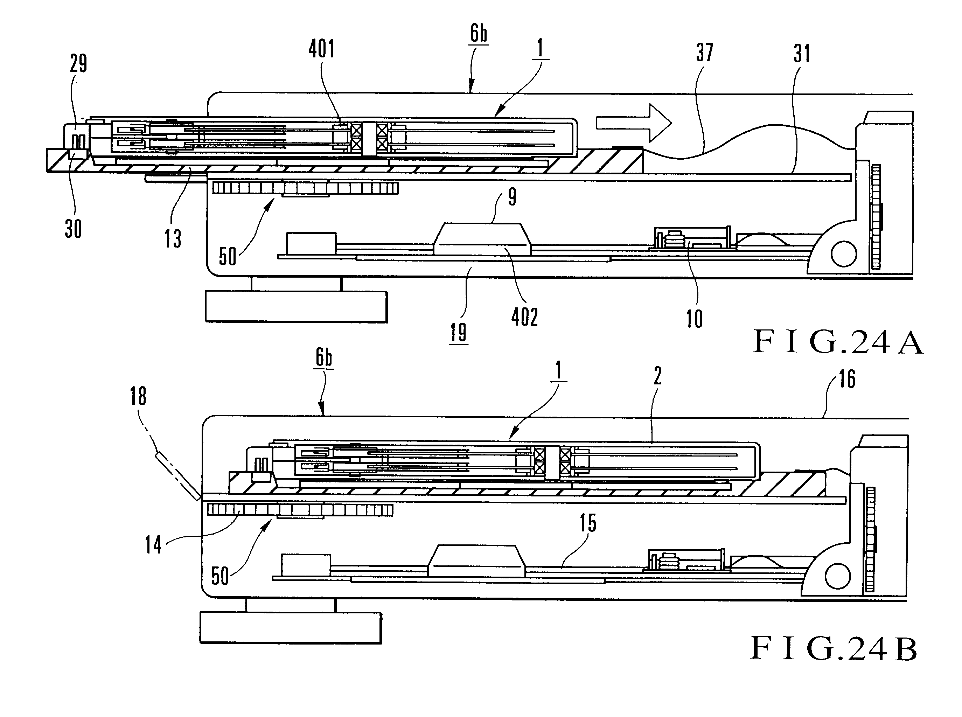

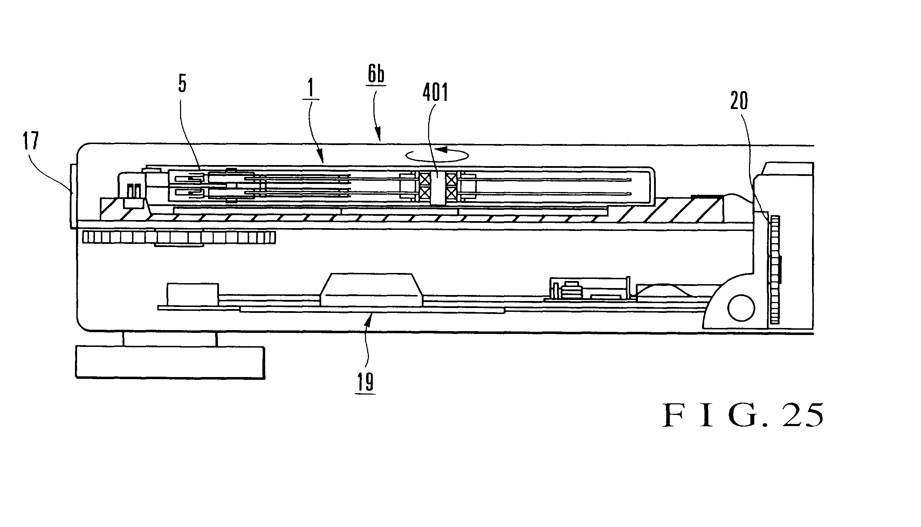

Loading operation in inserting the magnetic disk drive 1 will be explained with reference to Figs. 24A, 24B, and 25.

The magnetic disk drive 1 is loaded by the loading mechanism 50. That is, as shown in Figs. 24A and 24B, the magnetic disk drive 1 is loaded into the frame unit 16 of the compatible information recording/playback apparatus 6b along the tray guide rail 31 by the load gear 14 for driving the tray 13 in the loading direction (lateral direction in Figs. 24A and 24B).

When the controller 60 (Fig. 28) of the compatible information recording/playback apparatus 6b determines the inserted medium as the magnetic disk drive 1 by the inserted-medium determination mechanism 53 described in any one of the first to fourth embodiments, the controller 60 does not instruct the lift mechanism 20 to move down the tray 13.

After loading the magnetic disk drive 1, the magnetic recording medium 2 is rotated by a spindle motor 401 incorporated in the magnetic disk drive 1, and an actuator 5 starts positioning a magnetic head 3, as shown in Fig. 25. Consequently, information can be recorded/played back on/from the magnetic recording medium 2.

### [Sixth Embodiment]

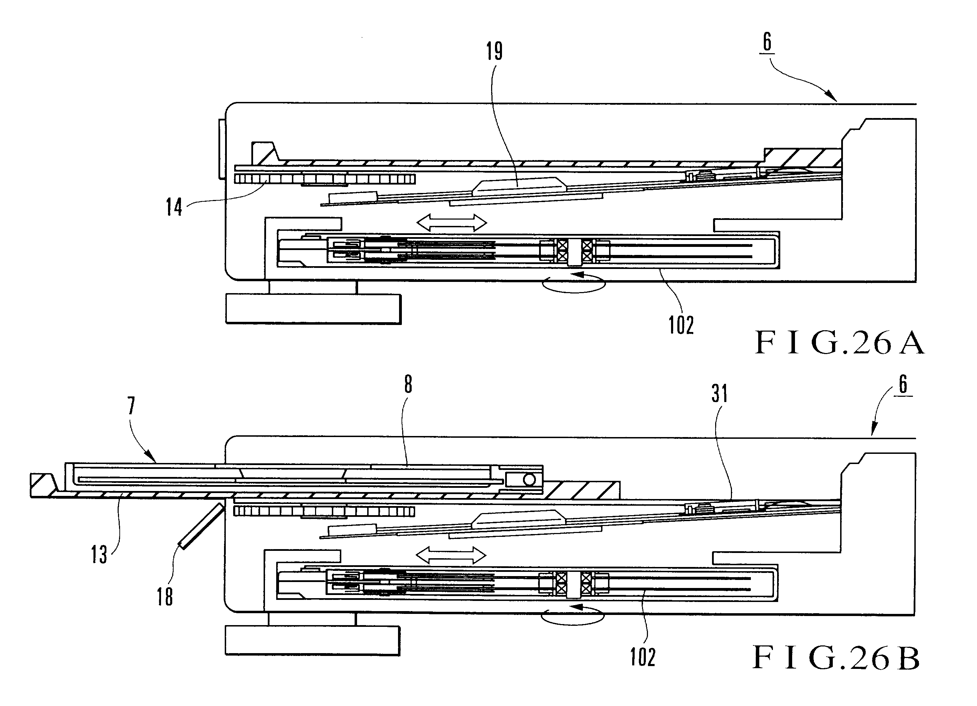

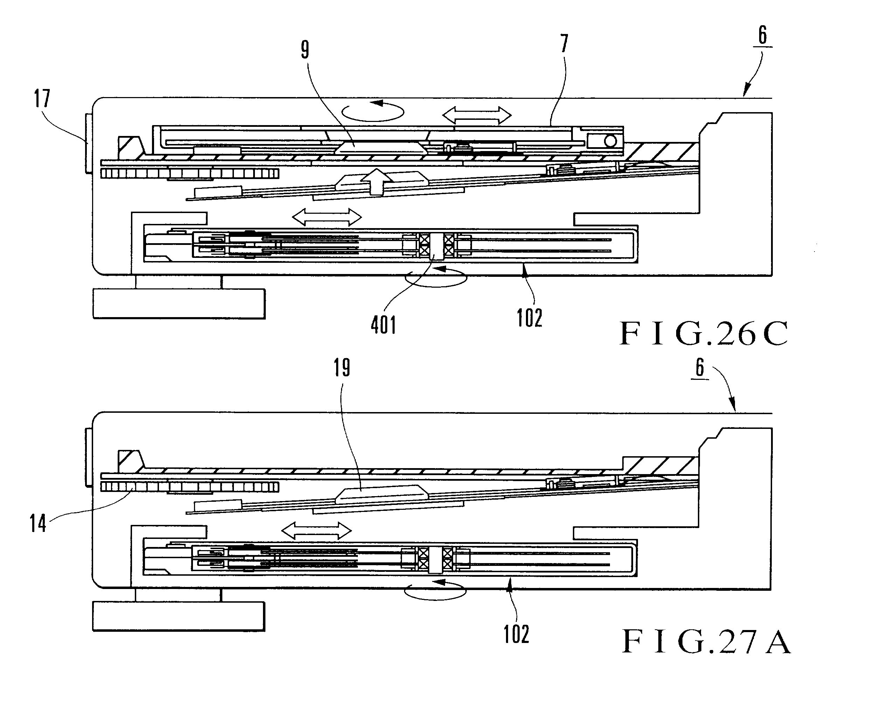

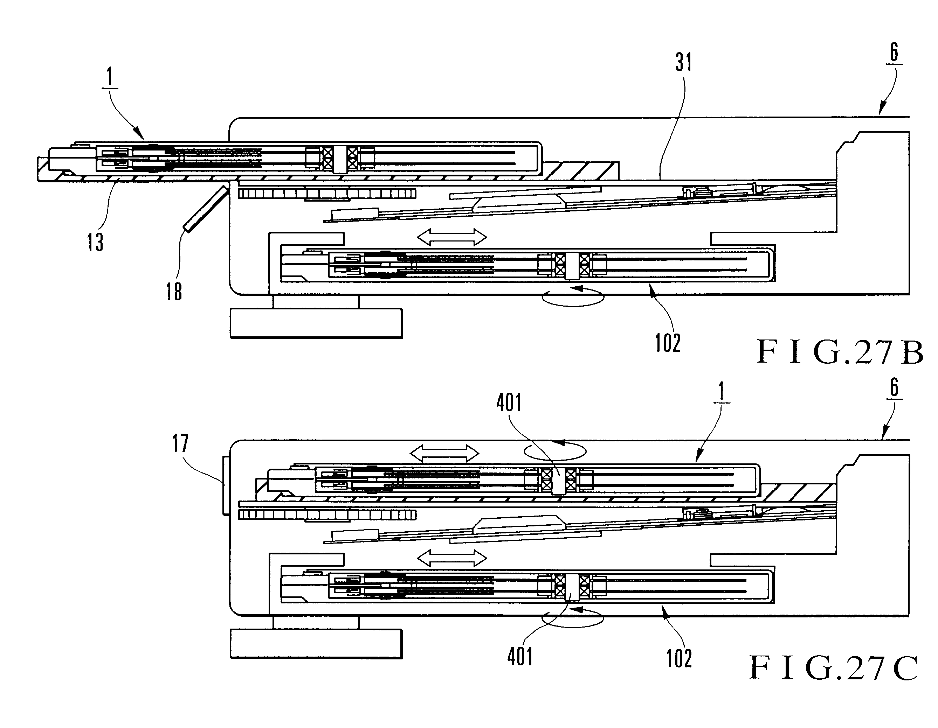

The compatible information recording/playback apparatus may use the magnetic disk drive of the present invention as a fixed magnetic disk drive 102 for the purpose of a cache, as shown in Figs. 26A to 26C and 27A to 27C.

In this case, as shown in Figs. 26A to 26C, an optical disk 8 and fixed magnetic disk drive 1 can be combined to dub, e.g., a program recorded as digital information on the fixed disk 102 to the optical disk 8.

In addition, as shown in Figs. 27A to 27C, the above-described detachable magnetic disk drive 1 and fixed magnetic disk drive 102 can be combined to double the storage capacity and double the data recording time.

Note that the connectors 29 and 30 in the above embodiments include standard connectors such as an IEEE 1394 connector, SCSI connector, and IDE connector.

The optical disk in the present invention includes all optical disk media having an outer diameter around 120 mm, such as a CD, CD-ROM, DVD-ROM, DVD-RAM, and MO (Magnetooptical disk).

In the above embodiments, the detection groove 24, prism 27, or mirror 28 are provided to the magnetic disk drive, but may be provided to the optical disk cartridge 7.

As has been described above, according to the present invention, the outer size of the housing of the magnetic disk drive except for the connector is made almost equal to the cartridge of the optical disk cartridge. As a result, the magnetic disk drive can be loaded into the information recording/playback apparatus without greatly modifying the loading mechanism of an information recording/playback apparatus for an existing optical disk.

Since a loading mechanism capable of inserting both the optical disk cartridge and magnetic disk drive is provided, information can be compatibly recorded/played back on/from the optical disk and magnetic disk drive by sharing the loading mechanism of a recording/playback apparatus for an existing optical disk without greatly modifying it. This can downsize the information recording/playback apparatus.

Since the information recording/playback apparatus comprises the inserted-medium determination mechanism of identifying whether an inserted medium is an optical disk cartridge or magnetic disk drive, a user can prepare for recording/playback by only inserting a selected medium, resulting in high operability and high convenience.

If an inserted medium is a magnetic disk drive, the inserted-medium determination mechanism generates a disk mount request to the control means of a host system, and the host system can automatically mount the magnetic disk drive.

The connector of the compatible information recording/playback apparatus is arranged to be connected to the connector of the magnetic disk drive when the magnetic disk drive is mounted on the loading mechanism. In loading the magnetic disk drive, a user can naturally connect interfaces during loading. The user can load the magnetic disk drive without any conventional cumbersome cable connection, resulting in high operability.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

In a compatible information recording/playback apparatus, an optical disk cartridge stores an optical disk. A magnetic disk drive stores a magnetic recording medium, drive mechanism, and first connector, and has almost the same outer size except for the first connector as the outer size of the optical disk cartridge. A loading mechanism loads the optical disk cartridge and disk drive serving as recording medium units. A medium determination mechanism identifies whether a loaded recording medium unit is the optical disk cartridge or magnetic disk drive. A second connector is connected to the first connector when the magnetic disk drive is loaded. An optical drive unit records/plays back information on/from the optical disk of the optical disk cartridge. A controller drives the optical drive unit when the medium determination mechanism identifies the loaded recording medium unit as the optical disk cartridge, and drives the drive mechanism of the magnetic disk drive via the first and second connectors when the medium determination mechanism identifies the loaded recording medium unit as the magnetic disk drive. A recording medium unit is also disclosed.

## Claims

1. Information recording/playback apparatus comprising:
an optical drive unit (19) for recording/playing back information on/from an optical disk stored in an optical disk cartridge;
a loading mechanism (50) for loading a said optical disk cartridge and a magnetic disk (1) for storing a magnetic recording medium (12) and a drive mechanism (3, 5) for recording/playing back information on/from a magnetic recording medium stored in said disk (1);
a medium determination mechanism (53) for identifying whether a said optical disk cartridge or a said magnetic disk has been loaded; and
a controller (60) for driving said optical drive unit when said medium determination mechanism identifies that a said optical disk cartridge has been loaded, or driving a drive mechanism of a said magnetic disk when said medium determination mechanism identifies that a said magnetic disk has been loaded.

2. Information recording/playback apparatus comprising:
an optical disk cartridge (7) for storing an optical disk (8) ;
an optical drive unit (19) for recording/playing back information on/from an optical disk stored in said optical disk cartridge;
a magnetic disk drive (1) for storing a magnetic recording medium (12) and a drive mechanism (3, 5) for recording/playing back information on/from a magnetic recording medium stored in said disk drive (1);
a loading mechanism (50) for loading said optical disk cartridge and said disk drive;
a medium determination mechanism (53) for identifying whether said optical disk cartridge or said magnetic disk drive has been loaded; and
a controller (60) for driving said optical drive unit when said medium determination mechanism identifies that said optical disk cartridge has been loaded, and driving said drive mechanism of said magnetic disk drive when said medium determination mechanism identifies that said magnetic disk drive has been loaded.

3. Apparatus according to Claim 2, wherein said medium determination mechanism comprises:
a target detection member (24, 27, 28) provided on one of said optical disk cartridge and magnetic disk drive; and
switch means (23, 25, 26) for co-operating with said target detection member and taking a first state when one of said optical disk cartridge and said magnetic disk drive has been loaded, and a second state when the other one of said optical disk cartridge and said magnetic disk drive has been loaded.

4. Apparatus according to Claim 3, wherein said target detection member comprises a detection groove (24) formed at a corner of an end of one of said optical disk cartridge and said magnetic disk drive, and
said switch means comprises a mechanical switch (23) for mechanically detecting the presence/absence of the detection groove.

5. Apparatus according to Claim 3, wherein said target detection member comprises a detection groove (24) formed at a corner of an end of one of said optical disk cartridge and said magnetic disk drive, and
said switch means comprises an optical switch (25, 26) for optically detecting the presence/absence of the detection groove.

6. Apparatus according to Claim 5, wherein said optical switch comprises:
a light-emitting element (25); and
a light-receiving element (26) for receiving light from said light-emitting element that has passed through the detection groove.

7. Apparatus according to Claim 3, wherein said target detection member comprises a light deflection member (27), 28) attached to an outer surface of one of said optical disk cartridge and said magnetic disk drive, and
said switch means comprises an optical switch (25, 26) for optically detecting the presence/absence of said light deflection member.

8. Apparatus according to Claim 7, wherein said apparatus switch comprises:
a light-emitting element (25); and
a light-receiving element (26) for receiving light from said light-emitting element that is deflected by said light deflection member.

9. Apparatus according to Claim 7 or 8, wherein said light deflection member is a prism (27).

10. Apparatus according to Claim 7 or 8, wherein said light deflection member is a mirror (28).

11. Apparatus according to any of Claims 2 to 10, wherein said optical drive unit is arranged below a loading position or a recording medium unit, and
said apparatus further comprises a pop-up mechanism (34) for moving up said optical drive unit to bring said optical drive unit into contact with said optical disk in said optical disk cartridge when said medium determination mechanism identifies that said optical disk cartridge has been loaded.

12. Apparatus according to Claim 11, wherein said optical drive unit comprises:
an optical pickup (10) for optically reading out information from said optical disk in said optical disk cartridge; and
a spindle motor (402) which has a turntable formed integrally with an upper portion of said spindle motor, for rotating said optical disk in said optical disk cartridge,
wherein when said pop-up mechanism brings said optical drive unit into contact with said optical disk in said optical disk cartridge, said optical pickup faces an optical disk surface in said optical disk cartridge, and said turntable presses said optical disk in said optical disk cartridge to transmit rotation.

13. Apparatus according to any of Claims 2 to 11, wherein said optical drive unit is arranged below a loading position of a recording medium unit, and
said apparatus further comprises a lift mechanism (20) for moving down said optical drive unit to bring said drive unit into contact with said optical disk in said optical disk cartridge when said medium determination mechanism that said optical disk cartridge has been loaded.

14. Apparatus according to Claim 13, wherein said optical drive unit comprises:
an optical pickup (10) for optically reading out information from said optical disk in said optical disk cartridge; and
a spindle motor (402) which has a turntable formed integrally with an upper portion of said spindle motor, for rotating said optical disk in said optical disk cartridge,
wherein when said lift mechanism brings said optical drive unit into contact with said optical disk in said optical disk cartridge, said optical pickup faces an optical disk surface in said optical disk cartridge, and said turntable presses said optical disk in said optical disk cartridge to transmit rotation.

15. Apparatus according to any of Claims 2 to 14, wherein when said medium determination mechanism identifies that said magnetic disk drive has been loaded, said controller instructs a host device to start operation necessary for recording/playing back information.

16. Apparatus according to any of Claims 2 to 15, wherein said magnetic disk drive includes a first connector (29), said apparatus comprising a second connector (30) which is connected to said first connector when said magnetic disk drive is loaded, said controller driving said magnetic disk drive via said connectors.

17. Apparatus according to Claim 16, wherein the outer size of said magnetic disk drive in a loading direction except for said first connector is set slightly larger than the outer shape of said optical disk cartridge,
said loading mechanism has two high and low mount surfaces (A, B) forming steps for mounting a leading end of a recording medium unit,
said magnetic disk drive does not contact said optical drive unit when said magnetic disk drive is loaded while being mounted on the high mount surface of said loading mechanism, and
said optical disk of said optical disk cartridge contacts said optical drive unit when said optical disk is loaded while being mounted on the low mount surface of said loading mechanism.

18. Apparatus according to Claim 17, wherein said loading mechanism comprises:
an inner tray (302) which has high and low mount surfaces;
an outer tray (33) for moving said inner tray from a mounting position to the loading position; and
a lift mechanism (21, 22) for lifting said inner tray when said outer tray is at the mounting position, and cancelling lifting of said inner tray to horizontally hold said inner tray when said outer tray moves to the loading position, and
when lifting of said inner tray is cancelled, said magnetic disk drive mounted on the high mount surface of said inner tray does not contact said optical drive unit, and said optical disk of said optical disk cartridge mounted on the low mount surface of said inner tray contacts said optical drive unit.

19. Apparatus according to Claim 16, wherein said first connector is attached to a trailing end of said magnetic disk drive in a loading direction so as to face downward,
said second connector is attached to a front portion of a tray constituting said loading mechanism so as to face upward, and
said first and second connectors are connected to each other when said magnetic disk drive is mounted on said loading mechanism.

20. Apparatus according to Claim 15, wherein said magnetic disk drive has substantially the same outer size except for said first connector as said optical disk cartridge.

21. A recording medium unit comprising:
a recording medium (2, 8);
a housing storing said recording medium; and
a target detection member (24, 27, 28) provided on an outer surface of said housing to indicate the type of the stored recording medium.

22. A unit according to Claim 21, wherein said target detection member is a detection groove (24) formed at a corner of an end of said housing.

23. A unit according to Claim 21, wherein said target detection member is a light deflection member (27), 28) attached to the outer surface of said housing.
